# EUROPEAN PATENT APPLICATION

(11) **EP 2 782 180 A1**
(43) Date of publication of application: **24.09.2014**
(21) Application number: 12848789.9
(22) Date of filing: 18.09.2012
(51) Int. Cl.: H01M 8/16, H01M 4/88, H01M 4/90, H01M 4/96, H01M 8/04

(54) **MICROBIAL POWER GENERATION DEVICE, ELECTRODE FOR MICROBIAL POWER GENERATION DEVICE, AND METHOD FOR PRODUCING SAME**

(30) Priority: 16.11.2011 JP 2011250557
(71) Applicant: National University Corporation Toyohashi University of Technology, Toyohashi-shi Aichi 441-8580 (JP)
(72) Inventor: YOSHIDA, Naoko, Toyohashi-shi Aichi 441-8580 (JP); HIRAISHI, Akira, Toyohashi-shi Aichi 441-8580 (JP); SANDHU, Adarsh, Toyohashi-shi Aichi 441-8580 (JP); IWASA, Seiji, Toyohashi-shi Aichi 441-8580 (JP); OKADA, Hiroshi, Toyohashi-shi Aichi 441-8580 (JP); TERO, Ryugo, Toyohashi-shi Aichi 441-8580 (JP); NAGAO, Yuji, Toyohashi-shi Aichi 441-8580 (JP)
(74) Representative: Kuhnen & Wacker
(86) International application number: PCT/JP2012/073864
(87) International publication number: WO 2013/073284

(57) **Abstract**

Provided are a microbial power generation device, an electrode for the microbial power generation device, preparing methods of the same, an electric power producing method using microbes and a selective culture method of the microbes used for the electric power producing method capable of improving electric power production capacity and of suppressing power generation cost. In a microbial power generation device (1), microbes (reducing microbes) that reduce graphene oxide are enriched among microbes inhabiting wastewater, slurry, activated sludge and the like. Therefore, the graphene oxide is reduced by the reducing microbes, so the graphene is produced. Electrons produced by the microbes can be transmitted to a negative electrode (14) via the produced graphene. As a result, the electric power production capacity can be improved and the power generation can be performed at a low cost.

## Description

### [Technical field]

The present invention relates to a microbial power generation device that generates power using microbes, to an electrode for the microbial power generation device, and to a method for preparing the same. Further, the present invention relates to an electric power producing method using microbes and to a selective culture method of microbes used for the electric power producing method. In particular, the present invention relates to a microbial power generation device, an electrode for the microbial power generation device, to a method for preparing the same, an electric power producing method using the microbes, and a selective culture method of the microbes used for the electric power producing method, which can improve electric power production performance by using graphene.

### [Background technology]

In recent years, there have been more and more needs for global-environment-friendly power generation methods, and technological development of microbial power generation has been advanced. The microbial power generation is based on a method of generating electricity by taking out a reducing power (electrons), which occurs when microbes cause oxidative decomposition (metabolism) of organic substance, as a current. That is, the microbial power generation device is a fuel cell that uses microbes as a catalyst.

For instance, the microbial power generation device has a negative electrode chamber, which accommodates a negative electrode, microbes and organic substance as a substrate, and a positive electrode chamber, which incorporates a positive electrode. The negative electrode chamber and the positive electrode chamber are separated by a diaphragm, which cations can permeate. If the negative electrode and the positive electrode are connected through an external circuit, electrons passed to the negative electrode move to the positive electrode and are passed to electron acceptors contacting the positive electrode. A current is caused between the positive electrode and the negative electrode by such the transfer of the electrons, whereby an electric power can be taken to the outside.

Electric power production performance of conventional microbial power generation devices is lower than that of chemical fuel cells. Therefore, in order to increase the electric power production capacity, electron transfer substance (electron mediator) is added into the negative electrode chamber. The electron mediator moves back and forth between an inside and an outside of a body of a microbe through a cell membrane, thereby transferring the electrons received inside the body of the microbe to the electrode or transferring the electrons, which are discharged from the cell, to the electrode. Quinones or the like are used as the electron mediator.

The microbial power generation device generates the electric power while decomposing the organic substance. Therefore, there is proposed a power generation system that combines the microbial power generation device with wastewater treatment for decomposing the organic substance in wastewater by the microbes, thereby generating the electricity while performing the wastewater treatment (for example, refer to Patent documents 1 and 2). General wastewater treatment performs treatment of a large volume of the wastewater. Therefore, if the electron mediator is used for improving the electric power production capacity, a large volume of the expensive electron mediator is necessary. In addition, the electron mediator discharged to the outside of the system has to be replenished continuously, so the power generation cost will increase. Some of electron mediators are toxic, and the electron mediator cannot be used easily.

For these reasons, a microbial power generation device using conductive fine particles containing iron oxide or the like in place for the electron mediator is examined (for example, refer to Patent document 3).

A method of using a nanocarbon material for a battery material is examined as a method for improving electric power production performance. The nanocarbon materials are excellent conductive materials and are also chemically stable. Therefore, they are gathering attention as battery materials. For instance, a negative electrode using nanotechnology for modifying a basic electrode such as graphite or carbon cloth with a conductive material such as carbon nanotube or graphene is reported (for instance, refer to Non-patent documents 1 and 2). Further, there is reported a technology that uses physicochemically synthesized graphene sheets in the shape of flakes contained in sol-gel matrix. The technology uses the graphene as an electron transmitting substance (fluid electrode) from enzyme to an electrode. It is reported that electric power production of an enzyme battery using glucose oxidase as a catalyst activates (for instance, refer to Non-patent document 3).

### [Prior art document]

### [Patent document]

[Patent document 1] JP-A-2006-81963
[Patent document 2] JP-A-2006-114375
[Patent document 3] WO2009/119846

### [Non-patent document]

[Non-patent document 1] Zhao, Y., Nakanishi, S., Watanabe, K., Hashimoto, K. (2011). Hydroxylated and aminated polyaniline nanowire networks for improving anode performance in microbial fuel cells. Journal of Bioscience and Bioengineering. 112: 63-66
[Non-patent document 2] Zhang, Y., Mo, G., Li, X., Zhang, W., Zhang, J., Ye, J., Huang, X., Yu, C. (2011) A graphene modified anode to improve the performance of microbial fuel cells. Journal of Power Sources 196: 5402-5407.
[Non-patent Document 3] Liu, C., S. Alwarappan, et al. (2010). "Membraneless enzymatic biofuel cells based on graphene nanosheets." Biosensors and Bioelectronics 25(7): 1829-1833.

### [Summary of the invention]

### [Problems to be solved by the invention]

However, there has been a problem that the electric power, which can be obtained with the conventional microbial power generation device, is quite low as compared to the chemical fuel cell such as a hydrogen fuel cell, and further improvement of the electric power production capacity is necessary for practical use.

Battery characteristics can be improved by using the nanocarbon materials as shown in Non-patent documents 1 to 3. However, advanced technology is required for manufacturing the nanocarbon materials, and it is difficult to mass-produce the nanocarbon materials having excellent conductivity at low cost. There have been problems that the use of the nanocarbon materials increases the cost, and the cost increases as the size of the power generation device increases. In addition, the technology described in Non-patent document 1 or 2 is the mechanism that collects the electricity from a small quantity of the microbes contacting the negative electrode among the entire microbes existing inside the reaction tank. Therefore, there has been a problem that significant improvement of the electric power production is difficult even if the battery performance is improved by the improvement of the negative electrode.

With the technology of the enzyme battery described in Non-patent document 3, it is difficult for the hydrophobic graphene to disperse in the water solution and to efficiently contact the enzyme as the catalyst. Therefore, the effect shown by the verification test using the enzyme battery is approximately twice as much as the effect of the battery, which does not use the graphene, and is limited. Therefore, even if the above technology is simply applied to the microbial power generation device, the electric power production cannot be improved significantly. As a result, a microbial power generation device that is low-cost and that can be used practically with sufficient electric power production capacity has not been provided yet.

The present invention was made to solve the above problems and has an object to provide a microbial power generation device, an electrode for the microbial power generation device, preparing methods of them, an electric power producing method using microbes and a selective culture method of the microbes used for the electric power producing method, which can improve the electric power production capacity and can suppress the power generation cost.

### [Means for solving problems]

In order to achieve the object, a first construction of the invention concerning a microbial power generation device has a negative electrode section that has a liquid containing organic substance and a negative electrode and that biodegrades the organic substance with microbes under an anaerobic atmosphere, a positive electrode section that has a positive electrode, and an external circuit that electrically connects the positive electrode and the negative electrode. The microbial power generation device generates power by transferring electrons from the negative electrode section to the positive electrode section via the external circuit. The negative electrode section has graphene.

Solids such as sludge, slurry or aquatic sediment may be contained in the negative electrode section together with the liquid containing the organic substance. Alternatively, only the liquid may be held. When the solids are held together with the liquid, a volume ratio of the solids may be larger than the ratio of the liquid. For instance, a state like soil containing moisture may be employed. The organic substance biodegraded by the microbes under the anaerobic atmosphere may be supplied from the outside in order to maintain the activity of the microbes. Alternatively, for instance, vegetation may be planted in the microbial power generation device to use the organic substance released from the vegetation.

According to a second construction of the invention concerning the microbial power generation device, in the above-described first construction, the graphene is produced by reducing graphene oxide with the microbes in the liquid.

According to a third construction of the invention concerning the microbial power generation device, in the above-described first or second construction, the graphene is produced by reducing graphene oxide, which is introduced into the negative electrode section, with the microbes inside the negative electrode section.

According to a fourth construction of the invention concerning the microbial power generation device, in the above-described second or third construction, the graphene forms a dense-sparse aggregation structure (i.e., aggregation structure consisting of dense portions and sparse portions), to which the microbes reducing the graphene oxide adhere.

According to a fifth construction of the invention concerning the microbial power generation device, in any one of the above-described first to fourth constructions, the microbial power generation device further has a supply port for supplying the liquid containing the organic substance, and a discharge port for discharging the liquid, which is supplied from the supply port, after the liquid passes through the negative electrode section and the positive electrode section. The positive electrode section is formed to be able to store the supplied liquid and has an oxygen supplying means for supplying oxygen to the positive electrode. The graphene is introduced into the positive electrode section.

For instance, "the oxygen supplying means" may be a construction to form an opening in the positive electrode section such that at least a part of the positive electrode is exposed to the atmosphere when the positive electrode is incorporated in the positive electrode section or to aerate the liquid stored in the positive electrode section. "Supplying the oxygen" may be performed to supply the oxygen in the form of the oxygen gas, in the form of a gas mixture of the oxygen and other gas or gases, or in the form of air.

According to a sixth construction of the invention concerning the microbial power generation device, in the above-described fifth construction, the microbial power generation device further has a storage tank for storing the liquid discharged from the positive electrode section, a release port, which is an opening formed in an upper portion of a wall of the storage tank, for releasing a supernatant liquid of the liquid stored in the storage tank, and a returning means for returning sludge, which settles in the storage tank, to the positive electrode section.

A construction of the invention concerning an electrode for the microbial power generation device is an electrode used for the microbial power generation device that generates power by taking out electrons, which are produced when the microbes biodegrade the organic substance, to the outside. The construction has a conductive structure of graphene enriched in a state where the microbes reducing the graphene oxide adhere to the graphene.

A construction of the invention concerning a preparing method of the electrode for the microbial power generation device is a preparing method of a microbial power generation device electrode used for the microbial power generation device that generates power by taking out electrons, which are produced when the microbes biodegrade the organic substance, to the outside. The preparing method has a culturing step for incubating microbes in a liquid containing organic substance and graphene oxide under an anaerobic atmosphere. In the culturing step, the microbes reduce the graphene oxide to graphene, and the produced graphene packaging the microbes by spontaneous aggregation and form a complex, thereby forming a conductive structure.

A construction of the invention concerning an electric power producing method using the microbes biodegrades the organic substance with the microbes under an anaerobic atmosphere and generates power by sending electrons produced with the biodegradation from a negative electrode to a positive electrode via an external circuit. The method interposes the graphene between the negative electrode and the microbes to transmit the electrons produced by the microbes to the negative electrode.

A construction of the invention concerning a selective culture method of microbes is a culture method of microbes used in the invention concerning the above-mentioned electric power producing method. The construction uses an agarose solid culture medium that contains organic substance and hydrogen as electron donors and contains graphene oxide as an electron acceptor. The construction uses a specimen in the environment as a source of inoculum of the microbes and cultures the microbes adhering to the source of the inoculum of the microbes with the agarose solid medium. The construction selectively isolates the microbes, which reduce the graphene oxide, by using black graphene, which is produced by reducing the graphene oxide, as an index.

### [Effects of the invention]

According to the first construction of the invention concerning the microbial power generation device, the organic substance is biodegraded by the microbes under the anaerobic atmosphere in the negative electrode section, and the generated electrons are transferred from the negative electrode to the positive electrode via the external circuit. Cations generated with the above reaction in the negative electrode section move to the positive electrode side and are consumed in an electrochemical reaction with the electrons transferred to the positive electrode section via the external circuit. Thus, electricity is generated. Since the graphene provided in the negative electrode section is an excellent electron conductive material, the graphene facilitates the transmission of the electrons from the microbes to the negative electrode, thereby exerting an effect to improve electric power production capacity. Activity of the microbes can be maintained by supplying the organic substance appropriately. If the organic substance is released from the vegetation planted in the microbial power generation device, self-feeding of the organic substance inside the power generation device can be performed without supplying the organic substance from the outside.

According to the second construction of the invention concerning the microbial power generation device, in addition to the effect exerted by the first construction, the graphene is produced when the microbes reduce the graphene oxide in the liquid. Therefore, the graphene can be obtained simply and easily. A larger volume of the graphene can be produced without using any special device or microbes than the physicochemical producing method. Accordingly, even if the graphene is introduced into the device, an effect to suppress the device cost can be exerted.

According to a third construction of the invention concerning the microbial power generation device, in addition to the effects exerted by the first or second construction, the graphene is produced by reducing the graphene oxide, which is introduced into the negative electrode section, with the microbes inside the negative electrode section, thereby exerting an effect to be able to produce the graphene inside the device. That is, the device can be used as a production equipment of the graphene as it is, without providing production equipment as a separate body. In addition, the produced graphene can be used in the negative electrode section as it is. Thus, the entire process from the production of the graphene to the power generation can be simplified, thereby improving workability.

The microbes that produce the graphene (i.e., microbes that reduce graphene oxide) are extracellular electron transfer microbes capable of reducing a solid electron acceptor, namely, electricity-generating microbes. It is desirable that the microbes, which perform the extracellular electron transfer, and the substance, to which the microbes transfer the electrons produced by the metabolism, exist close to each other. Therefore, the microbes that reduce the graphene oxide are enriched on the produced graphene. In other words, electric current generation efficiency can be improved by selectively accumulating the electricity-generating microbes.

According to a fourth construction of the invention concerning the microbial power generation device, in addition to the effects exerted by the second or third construction, the graphene forms a dense-sparse aggregation structure in a state where the microbes that reduce the graphene oxide adhere to the graphene. Therefore, voids distribute in the entire aggregate, so the aggregate is bulky as compared to the case where only the graphene aggregates. Accordingly, the graphene can be distributed in the wide area in the negative electrode section, and the electricity can be collected widely from the microbes existing in the entire negative electrode section. Therefore, the construction can exert an effect to increase the number of the microbes contributing to the electric current generation and to improve the electric power production.

According to a fifth construction of the invention concerning the microbial power generation device, in addition to the effects exerted by any one of the first to fourth constructions, the liquid containing the organic substance supplied from the supply port is discharged from the discharge port via the negative electrode section and the positive electrode section. The liquid is stored in the positive electrode section and the oxygen is supplied to the positive electrode by the oxygen supplying means. Therefore, the construction can exert an effect to enable smooth occurrence of the electrochemical reaction (reduction reaction), in which the oxygen, protons and the electrons participate, on the positive electrode by using the oxygen existing around the positive electrode.

Further, since the liquid can be stored in the positive electrode section in an aerobic environment, aerobic decomposition of the organic substance in the liquid can be promoted in the positive electrode section. Thus, the organic substance in the liquid discharged from the discharge port can be reduced, and water quality of the drainage can be improved. If wastewater is used as the supplied liquid, the device of the above construction can perform wastewater treatment.

The protons move in the liquid phase and reach the positive electrode. Therefore, the positive electrode is in contact with the liquid. However, quantity of the oxygen supplied to the positive electrode decreases in the liquid, and therefore the reactivity of the electrochemical reaction falls. Regarding this point, the graphene can act as a catalyst for the reaction in the positive electrode section. With such the catalytic action of the graphene, the reactivity of the electrochemical reaction in the positive electrode section can be improved. As a result, the power generation can be performed suitably while performing the wastewater treatment.

According to the sixth construction of the invention concerning the microbial power generation device, in addition to the effects exerted by the fifth construction, the liquid discharged from the positive electrode section is stored in the storage tank, and the supernatant liquid is released from the release port provided in the upper portion of the wall surface of the storage tank. If the aerobic decomposition occurs in the positive electrode section, the sludge increases in quantity. If the aeration or agitation is performed, the sludge also flows out with the discharge of the liquid from the positive electrode section. Since the liquid from the positive electrode section is stored in the storage tank, the sludge in the liquid settles and only the treated water (supernatant liquid) can be released to the outside from the release port. The graphene also flows out of the positive electrode section into the storage tank. The existence of the graphene in the sludge can exert an effect to improve the settling property of the sludge. The sludge settled in the storage tank is returned to the positive electrode section by the returning means. Therefore, as an effect, the graphene that flows out can be collected easily and the graphene can be used repeatedly.

According to the construction of the invention concerning the electrode for the microbial power generation device, the electrode is formed to have the conductive structure with the graphene enriched in the state where the microbes reducing the graphene oxide adhere to the graphene. Therefore, the construction can have the electrode structure that performs electronic conduction by the graphene. The construction can exert an effect to improve the electronic conductivity as compared to an electrode using metal or graphite. Generally, a precious metal catalyst such as platinum is used for the electrode in order to promote collection of the electricity from the microbes. The electrode of the present invention can substitute for the precious metal catalyst because of the effect of the graphene to promote the collection of the electricity from the microbes. As a result, the electrode has an effect to reduce the quantity of the used precious metal catalyst such as platinum and to reduce the cost.

Further, the microbes that reduce the graphene oxide are microbes that can perform extracellular electron transfer. The electrode has the conductive structure of the graphene enriched in the state where such the microbes adhere to the graphene. Accordingly, the electrons generated by the microbes can be efficiently conducted by the graphene. As compared to the case where the electrons are transferred from the microbes to the electrode only through the contact between the microbes floating in the liquid and the electrode, the electron transfer from the microbes to the electrode is performed at high frequency. Therefore, the use of the electrode of the present invention for the microbial power generation device exerts an effect to demonstrate excellent power generation performance.

According to the construction of the invention concerning the preparing method of the electrode for the microbial power generation device, the culturing step incubates microbes in the liquid containing the organic substance and the graphene oxide under an anaerobic atmosphere. Thus, the graphene oxide is reduced to the graphene by the reducing power caused by oxidation of organic acid by the microbes in the culturing step, and the produced graphene packaging due to the spontaneous aggregation in the state where the microbes reducing the graphene oxide adhere to the graphene, thereby forming the conductive structure. Thus, the method exerts an effect to enable easy preparation of the electrode with the excellent electronic conductivity at a low cost without using an advanced and large-scale device. The use of the electrode for the microbial power generation device prepared by the above preparing method exerts an effect to demonstrate excellent power generation performance of the microbial power generation device.

According to the construction of the invention concerning the electric power producing method using the microbes, the organic substance is biodegraded by the microbes under the anaerobic atmosphere and the electrons generated by the microbes in connection with the biodegradation are transmitted to the negative electrode by the graphene intervening between the negative electrode and the microbes. The electrons transmitted to the negative electrode are sent out to the positive electrode by the external circuit, thereby performing the power generation. Thus, an effect to facilitate the transmission of the electrons generated by the microbes to the negative electrode and to improve the electric power production capacity is exerted.

According to the construction of the invention concerning the selective culture method of the microbes, the microbes that reduce the graphene oxide can be isolated selectively by using the black graphene, which is produced by reducing the graphene oxide, as the index. Therefore, for instance, by performing visual detection of the black graphene, the microbes that reduce the graphene oxide can be selectively isolated easily and efficiently.

### [Brief description of drawings]

[Fig. 1] Fig. 1 is a diagram showing an outline of a microbial power generation device according to an embodiment of the present invention.
[Fig. 2] Fig. 2 is a diagram showing a schematic construction of a microbial power generation device according to a second embodiment.
[Fig. 3] Fig. 3 is a diagram showing a schematic construction of a microbial power generation device according to a third embodiment.
[Fig. 4] Fig. 4 is a diagram showing a schematic construction of a graphene manufacturing device annexed to the microbial power generation device of the third embodiment.
[Fig. 5] Fig. 5 is a diagram illustrating an outline of an electrode for the microbial power generation device of the embodiment of the present invention and a preparing method of the same.
[Fig. 6] Fig. 6 is a diagram showing a schematic construction of an application example of the embodiment of the microbial power generation device.
[Fig. 7] Fig. 7 is a diagram showing a schematic construction of an application example of the embodiment of the microbial power generation device.
[Fig. 8] Fig. 8 is a graph showing a state of power generation using a graphene electrode.
[Fig. 9] Fig. 9 is a diagram showing a schematic construction of an example embodiment of a soil battery.
[Fig. 10] Fig. 10 is a graph showing a state of power generation of the example embodiment of the soil battery.
[Fig. 11] Fig. 11 is a diagram showing a schematic construction of an example embodiment of a rice fuel cell.
[Fig. 12] Fig. 12 is a graph showing a state of power generation of the example embodiment of the rice fuel cell.

### [Embodiments for implementing the invention]

Hereinafter, preferred embodiments of the present invention will be described with reference to the accompanying drawings. In the drawings, identical sign is used for the same component, and explanation thereof is omitted or simplified. The drawings schematically show the construction of the invention. A part of the construction is omitted or simplified. The size in the drawing is not necessarily the same as the size of the actual device.

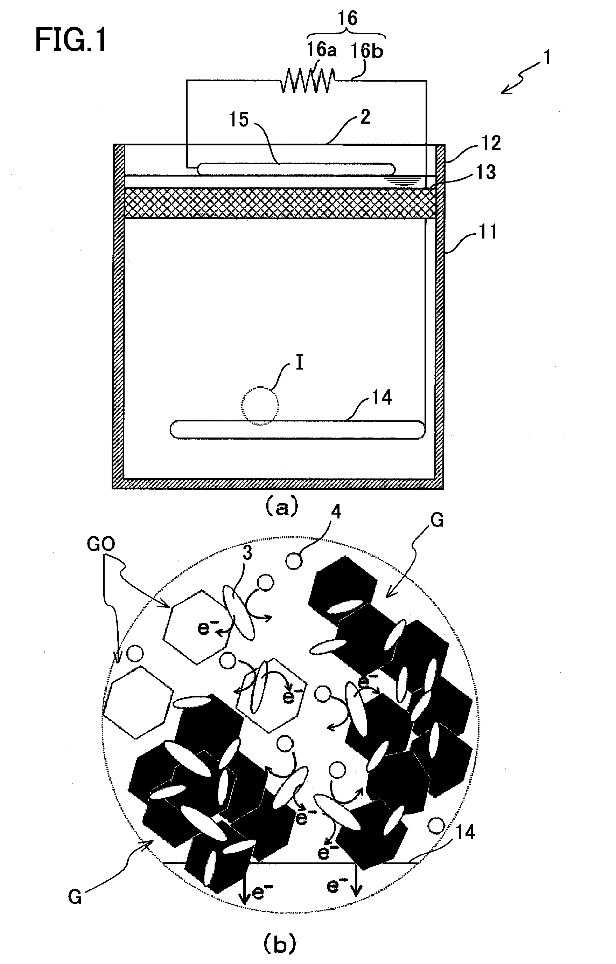

Fig. 1 is a diagram showing an outline of a microbial power generation device 1 according to an embodiment of the present invention. Fig. 1(a) is a schematic construction diagram of the microbial power generation device 1, and Fig. 1(b) is a partially enlarged diagram showing a part indicated by I in Fig. 1(a) in a large scale.

As shown in Fig. 1(a), the microbial power generation device 1 has a casing 2 made of a non-conductive material. The casing 2 is formed in the shape of a cylinder with a bottom. An upper face of the casing 2 is open. The casing 2 has a negative electrode chamber 11 and a positive electrode chamber 12 inside.

The negative electrode chamber 11 is formed in a lower part of the casing 2, and an inside of the negative electrode chamber 11 is filled with aqueous liquid containing organic substance (substrate 4). Therefore, inflow of air from the opening in the upper face is blocked, and the inside of the negative electrode chamber 11 is maintained as an anaerobic environment. Solid contents such as soil, slurry and sludge are mixed in the aqueous liquid. Further, microbes and graphene are held in the negative electrode chamber 11 with the aqueous liquid.

A reaction mechanism that produces electrons in the negative electrode chamber 11 will be explained using the partially enlarged diagram Fig. 1(b) of the inside of the negative electrode chamber 11.

In an initial state, graphene oxide (indicated by white hexagon GO in Fig. 1(b)) is put in the negative electrode chamber 11 in addition to the aqueous liquid containing the organic substance (substrate 4), the soil, the slurry, the sludge, aqueous sediments and the like. The soil, the slurry, the sludge, the aqueous sediment and the like contain microbes and organic substance. Therefore, by inputting them, the microbes and the organic substance are introduced into the negative electrode chamber 11. Organic substance serving as the substrate 4 may be added to the negative electrode chamber 11 separately.

Examples of the substrate to be added may be sugars such as glucose, short-chain fatty acids such as lactic acid and acetic acid, and compound organic extracts such as peptone and yeast extract. The acetic acid is used suitably.

The term "aqueous liquid" is a concept including water, a water solution, in which a solute such as organic substance or inorganic substance is dissolved, a mixed solvent in which organic solvent is intermingled, emulsion, suspension and the like.

The input graphene oxide is hydrophilic and is dispersed in the aqueous liquid suitably, thereby distributing widely in the entire negative electrode chamber 11. Since the negative electrode chamber 11 provides the anaerobic environment, the organic substance (substrate 4) is metabolized (i.e., biodegraded) by anaerobes. Electrons (indicated as "e-" in Fig. 1(b)) are generated in the process. Although not shown, hydrogen ions are released as metabolite.

Reducing microbes, which perform extracellular electron transfer among the anaerobes, supply the graphene oxide with the electrons generated by the organic acid oxidation. The graphene oxide is reduced to the graphene (denoted with black hexagon G in Fig. 1(b)). Then, the electrons, which are generated by the reducing microbes due to the oxidation of the substrate 4, are collected by the graphene and are transmitted to the negative electrode 14 through other contacting graphene. Thus, with the direct transfer of the electrons from the reducing microbes to the negative electrode 14 and also electron transfer through the graphene, the electron transfer is promoted as a whole. Thus, the electric power that can be recovery can be improved.

In this way, by adding the graphene oxide, the reducing microbes that reduce the graphene oxide to the graphene are enriched (i.e., selectively concentrated and cultured). In the metabolic mechanism of the anaerobes, the electrons are transferred to materials inside or outside the cells. The reducing microbes originally have an extracellular electron transfer ability. Therefore, the microbes that perform the extracellular electron transfer will be enriched in the negative electrode chamber 11. Accordingly, the electrons produced by the microbes performing the extracellular electron transfer can be taken out to an external circuit 16. Therefore, addition of electron mediator, which is used for taking out the electrons from the inside of the bodies of the microbes, from the outside can be made unnecessary. Furthermore, the graphene is an excellent conductive material and is also stable against chemicals such as an acid. Therefore, electrical properties are maintained for a long time also in the aqueous liquid. By using the graphene for the electron transfer substance, the microbial power generation device 1 can maintain the stable power generation performance.

Moreover, in the method of performing the power generation by receiving the electrons released by the microbes and delivering the electrons to the negative electrode through the graphene, which is the conductive substance, the electric power production amount improves as the more microbes contact the conductive substance. Therefore, effectiveness increases as the specific surface of the conductive substance increases. Since the graphene has the surface area equal to the volume, the graphene has a much wider surface area than metal particles or the like. Therefore, the graphene serves as an excellent conductive substance.

Conventionally, methods of producing the graphene by a chemical vapor deposition method or a physical method have been proposed. However, it is difficult to produce the graphene in a large volume with these conventional methods. Regarding this point, according to the present embodiment, the graphene oxide, which can be obtained simply by processing cheap graphite with acid, is used as a raw material, and the graphene oxide is reduced with the microbes (reducing microbes). Thus, a large volume of the graphene can be produced easily as compared with the conventional methods. Moreover, with the conventional methods, even if a large volume of the graphene could be obtained, the graphene would aggregate promptly if the graphene is put into the aqueous liquid. As a result, the original specific surface of the graphene cannot be utilized effectively.

As contrasted thereto, with the method of the present embodiment, the reducing microbes adhere to the obtained graphene, and the graphene is in a state of flocks (dense-sparse aggregation structure, i.e., aggregation structure consisting of dense portions and sparse portions) in the aqueous liquid. Therefore, the area contacting the microbes that exist inside the negative electrode chamber 11 and perform the extracellular electron transfer, i.e., available area of the graphene, can be secured sufficiently. As a result, more microbes are enabled to contact the graphene and can be made to contribute to the generation of the electric current, thereby improving the current amount that can be taken out to the external circuit 16.

The microbes (reducing microbes) held in the negative electrode chamber 11 are microbes capable of performing the extracellular electron transfer and include species of genenera Geobacter, Shewanella, Desulfovibrio of Deltaproteobacteria class and the like. A microbial community containing one or more of them is illustrated as an example.

A negative electrode 14 electrically connected with a conducting wire 16b of the external circuit 16 is arranged near a bottom of the negative electrode chamber 11. The negative electrode 14 is made of a conductive material for collecting the electrons produced by the metabolic reaction of the microbes that decompose the organic substance. The negative electrode 14 is arranged near the bottom of the casing where highly reduced in order to receive the electrons from the microbes that decompose the organic substance in the anaerobic environment.

The negative electrode 14 having resistance against the acid and the like produced in the negative electrode chamber 11 is selected. For instance, a carbon electrode such as graphite, carbon cloth or carbon paper or an electrode made of a metal is used as the negative electrode 14. Alternatively, a graphene electrode of the present invention mentioned later may be used.

Further explanation will be given with reference to Fig. 1(a) again. A segmentation member 13 is provided above the negative electrode chamber 11 for defining the negative electrode chamber 11 and the positive electrode chamber 12 in a segmented manner. The segmentation member 13 segments the inside of the casing 2 into the negative electrode chamber 11 and the positive electrode chamber 12. The segmentation member 13 has an effect to prevent the inflow of the graphene and the microbes from the negative electrode chamber 11 and an effect to prevent the supply of the oxygen to the negative electrode chamber 11. More specifically, the segmentation member 13 is constituted by a nonwoven fabric. A periphery of the segmentation member 13 is inscribed in an inner wall of the casing 2. A lower surface of the segmentation member 13 provides a face of the negative electrode chamber 11. An upper surface of the segmentation member 13 provides a face of the positive electrode chamber 12.

The segmentation member 13 blocks the inflow of the solids such as the graphene and the slurry in the negative electrode chamber 11 into the positive electrode chamber 12 but allows the cations (protons) produced in the negative electrode chamber 11 to penetrate to the positive electrode chamber 12. Therefore, the lower surface of the segmentation member 13 is in close contact with the liquid surface of the aqueous liquid stored in the negative electrode chamber 11, and the aqueous liquid is stored in the positive electrode chamber 12. Thus, the casing 2 is filled with the liquid permeated from the negative electrode chamber 11 or the positive electrode chamber 12. Thus, the liquid phase continuous from the negative electrode chamber 11 to the positive electrode chamber 12 is formed. Therefore, the protons generated in the negative electrode chamber 11 can penetrate through the segmentation member 13 and can move to the positive electrode chamber 12 side. The segmentation member 13 may be constituted with a filter paper or a deposited layer of glass beads having diameters of 0.05-0.5 mm in place for the nonwoven fabric. Alternatively, the segmentation member 13 may be constituted with a proton permeable film or a cation exchange membrane. In the case where a large volume of the solids such as soil is mixed in the aqueous liquid in the negative electrode chamber 11 and the negative electrode chamber 11 is filled with the slurry liquid substance, the segmentation member 13 may be omitted.

Atop face of the positive electrode chamber 12 is open, so the positive electrode chamber 12 is maintained in an aerobic environment exposed to the atmospheric air. As mentioned above, the aqueous liquid is stored in the positive electrode chamber 12, so a gas-liquid interface is formed in the positive electrode chamber 12. The positive electrode 15 is arranged at the gas-liquid interface.

The positive electrode 15 is constituted by a conductive material and is connected to the negative electrode 14 and a metallic conducting wire through the external circuit 16. The positive electrode 15 is formed in the shape of a flat plate and is arranged such that its planar direction is substantially parallel to the liquid level. An electrochemical reaction of consuming the oxygen in the atmosphere and the protons in the liquid arises at the positive electrode 15. Therefore, in order to improve the reaction efficiency, the planar direction is arranged to be substantially parallel to the liquid level and the lower face side is arrange at the height to contact the liquid surface (i.e., gas-liquid interface) such that the wide surfaces of the positive electrode 15 contact both of the atmospheric air and the stored aqueous liquid as widely as possible. In Fig. 1, the positive electrode 15 is arranged to position the lower face of the positive electrode 15 on the liquid surface. As long as a surface of the positive electrode 15 is in contact with the atmospheric air, the other part may be immersed in the liquid.

That is, arranging the positive electrode 15 at the gas-liquid interface means that a part of the positive electrode 15 contacts the liquid phase and another part of the positive electrodes 15 is exposed in the atmospheric air. The positive electrode 15 is not necessarily required to have the shape like the flat plate. Alternatively, for instance, the positive electrode 15 may be formed in the shape of a solid cylinder, a hollow cylinder, a circular column, a cuboid or the like, and the positive electrode 15 having a part, which is exposed above the liquid level when the positive electrode 15 is installed above the surface of the lower member (i.e., segmentation member), may be selected.

In this way, since the positive electrode 15 is arranged at the gas-liquid interface, the positive electrode 15 can be exposed to the air and the liquid constantly. Accordingly, the reduction reaction, in which the oxygen, the protons and the electrons participate, can be caused at the positive electrode 15 using the oxygen abundantly existing around the positive electrode 15, thereby advancing the reaction promptly. In addition, aeration for supplying the oxygen to the positive electrode 15 can be made unnecessary, so the size of the entire device can be reduced.

An electrode formed by using the graphite, the platinum, the carbon cloth, the carbon supporting the platinum or other metal is used for the positive electrode 15 like the negative electrode 14. Also, the graphene electrode of the present invention mentioned later may be used.

In the microbial power generation device 1 having the above-described construction, the electrons taken into the negative electrode 14 move to the positive electrode 15 through the external circuit 16 having a resistance 16a and a conducting wire 16b. Molecular oxygen is introduced into the positive electrode chamber 12. An electrochemical reaction (reduction reaction) to combine the oxygen with the electrons and the protons passing through the segmentation member 13 and to change them into water occurs on the positive electrode 15. By the series of reactions, the electron transfer is performed between the negative electrode 14 and the positive electrode 15, and the current arises.

Alternatively, the microbial power generation device 1 may be constructed such that the segmentation member 13 is a solid polymer electrolyte and the protons move in the solid polymer electrolyte. In that case, there is no need to store the aqueous liquid in the positive electrode chamber 12. The reaction at the positive electrode 15 is not limited to the above-mentioned electrochemical reaction using the protons and the oxygen. Any reaction may be employed as long as the reaction gives the electrons to the electron acceptors. If the cations generated at the negative electrode chamber 11 are consumed, the reaction is not limited to the above-mentioned electrochemical reaction. It is sufficient if the microbes exist at least in the negative electrode chamber 11. The reaction in the positive electrode chamber 12 may be a chemical reaction, in which the microbes do not intervene. An agitator mechanism for agitating the liquid in the negative electrode chamber 11 of the microbial power generation device 1 may be provided. Thus, the flocks of the graphene oxide or the graphene move to a wide area in the negative electrode chamber 11 due to generated water streams, and the electrons released by the microbes existing in the various parts can be obtained. Further, the probability of the contact with the negative electrode 14 improves. Therefore, more electrons obtained can be transferred to the negative electrode 14.

Next, a microbial power generation device 20 according to a second embodiment of the present invention will be explained. A construction of the microbial power generation device 20 of the second embodiment that is the same as the construction of the microbial power generation device 1 of the first embodiment is denoted with the same sign and the explanation thereof is omitted.

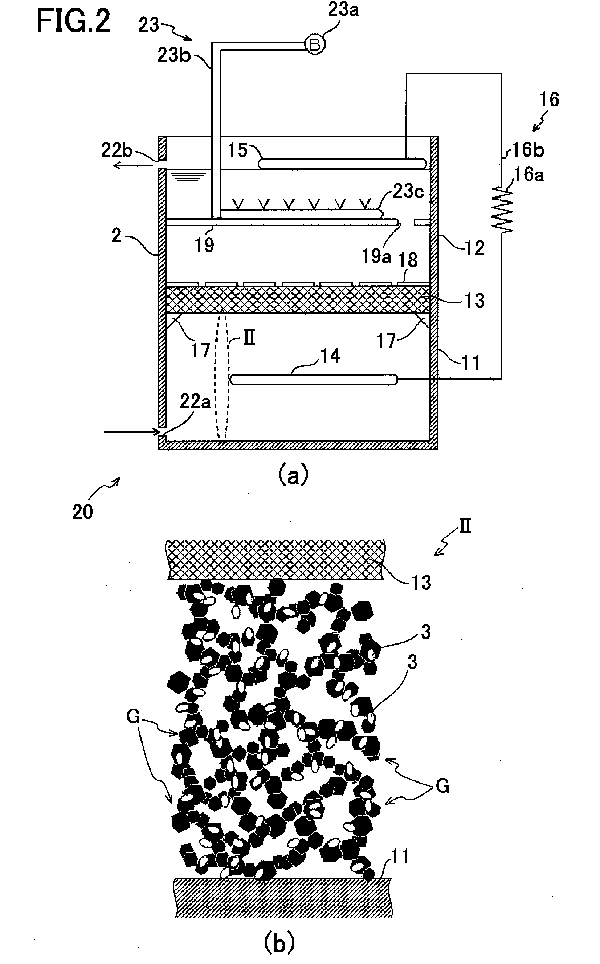

Fig. 2 is a diagram showing a schematic construction of a microbial power generation device 20 according to the second embodiment. Fig. 2(a) is a schematic diagram of the configuration of the microbial power generation device 20. Fig. 2(b) is a partial expanded diagram showing a part indicated by II in Fig. 2(a) in a large scale.

As shown in Fig. 2(a), like the first embodiment, the microbial power generation device 20 is constructed such that the negative electrode chamber 11 is formed in the lower part of the casing 2, and the positive electrode chamber 12 is formed in the upper part of the casing 2.

Through holes 22a, 22b channeling with the outside are bored in a side face of the casing of the microbial power generation device 20. The through hole 22a is formed in the lower part of the casing 2 for providing channel between the negative electrode chamber 11 and the outside. The through hole 22b is formed in the upper part of the casing 2 for providing channel between the positive electrode chamber 12 and the outside.

The through hole 22a serves as a supply port for supplying the aqueous liquid (raw water) containing the organic substance into the negative electrode chamber 11 from the exterior. A piping (not shown) for supplying the aqueous liquid from the exterior is connected to the through hole 22a. The raw water supplied from the through hole 22a passes from the negative electrode chamber 11 and through the segmentation member 13. Then, the raw water flows into the positive electrode chamber 12 and is discharged from the through hole 22b to the exterior.

A plurality of protrusions 17 for supporting the segmentation member 13 are installed in the negative electrode chamber 11 along a circumferential direction of an inner wall of the negative electrode chamber 11 at a predetermined interval such that the protrusions 17 protrude. The segmentation member 13 is put and supported on the protrusions 17. A disk 18 is fit on the positive electrode chamber side of the segmentation member 13. A plurality of through holes are formed in the disk 18 to penetrate through the disk 18 in the thickness direction. The disk 18 has a diameter approximately equal to the inner diameter of the casing 2 (i.e., inner diameter of negative electrode chamber). Therefore, even if the liquid flows from the negative electrode chamber 11 toward the positive electrode chamber 12 in the microbial power generation device 20, the segmentation member 13 is held at a predetermined height (position) inside the casing by the protrusions 17 and the disk 18.

The positive electrode chamber 12 further has a partition plate 19, which partitions the inside of the positive electrode chamber 12 into an upper part and a lower part. The partition plate 19 is provided by a disk-like member having a diameter approximately equal to an inner diameter of the casing 2 (i.e., inner diameter of positive electrode chamber). The partition plate 19 is fixed at a predetermined position inside the positive electrode chamber 12. A through hole 19a penetrating through the partition plate 19 in a vertical direction is formed near a periphery of the partition plate 19. Therefore, the aqueous liquid flowing from the negative electrode chamber 11 into the positive electrode chamber 12 passes through the through hole 19a from the lower part of the positive electrode chamber 12 and flows into the upper part of the positive electrode chamber 12.

An air diffusing section 23c of an aeration device 23 is installed on the top face of the partition plate 19. The aeration device 23 has an aerating means 23a constituted by an air pump, a blower or the like, an air pipe 23b for delivering air from the aerating means 23a and the air diffusing section 23c, which is provided at the end of the air pipe 23b and has a plurality of openings for discharging the air delivered by the air pipe 23b. The air supplied from the aerating means 23a provided outside is delivered out to the positive electrode chamber 12 through the air pipe 23b, which extends from the aerating means 23a to the inside of the positive electrode chamber 12. Then, the air is discharged from the openings formed in the upper face of the air diffusing section 23c in the positive electrode chamber 12.

Thus, the molecular oxygen is supplied to the aqueous liquid stored in the upper part of the positive electrode chamber 12 partitioned by the partition plate 19, whereby the aerobic environment is formed. Accordingly, the aerobic microbes in the positive electrode chamber 12 are activated, and the aerobic decomposition of the organic substance in the liquid is promoted. Supply of the air to the lower part of the positive electrode chamber 12 is inhibited by the partition plate 19. Thus, deterioration of the anaerobic environment of the negative electrode chamber 11 can be inhibited.

Fig. 2(b) is an enlarged diagram of the part II in the negative electrode chamber 11 of the microbial power generation device 20 according to the second embodiment and is a drawing schematically illustrating an inside structure of the microbial power generation device 20. The graphene produced by reducing the graphene oxide aggregates in a state where the microbes (reducing microbes) adhere thereto and forms a dense-sparse aggregation structure (flocks) in the aqueous liquid. In Fig. 2(b), the graphene is indicated with black hexagon G. Since the reducing microbes intervene, the aggregation structure has more remarkable dense-sparse aggregation structure and is more bulky than an aggregation structure formed only with the graphene. In the microbial power generation device 20 of the second embodiment, the flocks of the graphene are formed in the entire negative electrode chamber 11 by adjusting the input (concentration) of the graphene oxide. Therefore, conductive paths (conducting passages) are formed as a network in the entire chamber. Thus, the utilization factor of the electrons (electricity collection rate) produced by the reducing microbes can be improved. Voids exist in the flocks of the graphene and the aqueous liquid flows into the voids. Therefore, the substrate, the microbes and the graphene can be brought into contact efficiently, thereby improving the producible electric power.

Thus, with the microbial power generation device 20 of the second embodiment, the organic substance can be continuously supplied into the device, whereby continuous power generation can be performed. Furthermore, the raw water introduced into the device is discharged to the outside of the device via the negative electrode chamber 11 and the positive electrode chamber 12. Therefore, by using the wastewater as the raw water, the anaerobic decomposition of the organic substance in the liquid can be performed in the negative electrode chamber 11, and the aerobic decomposition of the organic substance in the liquid can be performed in the positive electrode chamber 12. In this way, the wastewater treatment can be performed while performing the power generation.

Next, a microbial power generation device 30 according to a third embodiment of the present invention will be explained. A construction of the microbial power generation device 30 of the third embodiment that is the same as the construction of the microbial power generation device 1 of the first embodiment is denoted with the same sign and the explanation thereof is omitted.

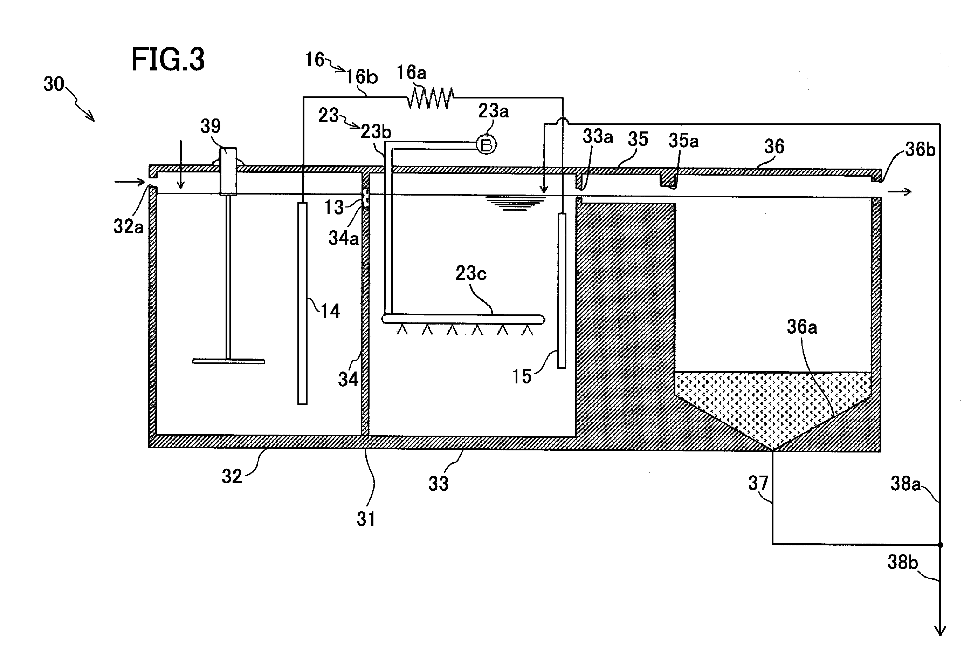

Fig. 3 is a diagram showing a schematic construction of a microbial power generation device 30 according to the third embodiment. The microbial power generation device 30 enables wastewater treatment and has a treatment tank 31, an introduction tank 35 and a settling tank 36. The treatment tank 31 has an anaerobic treatment tank 32 and an aerobic treatment tank 33. The anaerobic treatment tank 32, the aerobic treatment tank 33 and the settling tank 36 are made of solid materials such as concrete, glass or ceramics or metallic materials. As a more preferable mode, as these tanks, unit bodies manufactured as divided molds in factories by a precast process using molding dies are delivered into each installation site and are assembled appropriately. A negative electrode is provided in the anaerobic treatment tank 32, which serves as a negative electrode chamber. A positive electrode is provided in the aerobic treatment tank 33, which serves as a positive electrode chamber.

The anaerobic treatment tank 32 is formed in a box-like shape with its top face blocked and can store organic wastewater. A supply port 32a for supplying the organic wastewater from an outside is formed in an upstream side face of a casing of the anaerobic treatment tank 32 such that the supply port 32a penetrates through the side face. An agitating device 39 for agitating the organic wastewater supplied from the supply port 32a and the negative electrode 14 are provided in the anaerobic treatment tank 32. Further, an input port (not shown) is provided in the top face of the anaerobic treatment tank 32 for adding the graphene oxide into the tank. The graphene oxide is added in a direction indicated by an arrow mark upper part the anaerobic treatment tank 32 in Fig. 3. The added graphene oxide is reduced by the microbes (reducing microbes) grown in the raw water supplied into the tank. Therefore, the produced graphene is held in the anaerobic treatment tank 32. Agitation is not necessarily required in the anaerobic treatment tank 32, so the agitating device 39 may be omitted. In that case, the graphene deposits on the bottom, and therefore the negative electrode 14 is arranged near the bottom such that the negative electrode 14 contacts the graphene deposit.

As in the case of the anaerobic treatment tank 32, the aerobic treatment tank 33 is formed in a box-like shape with its top face blocked and has a structure capable of storing the liquid. An air diffusing section 23c of an aeration device 23 and a positive electrode 15 are provided in the aerobic treatment tank 33. In the present embodiment, openings are formed in the lower face of the air diffusing section 23c, and the air is discharged downward. A partition wall 34 partitions the anaerobic treatment tank 32 and the aerobic treatment tank 33. A through hole 34a is formed in an upper part of the partition wall 34 for providing channel between the anaerobic treatment tank 32 and the aerobic treatment tank 33. A segmentation member 13 is fixed to the through hole 34a. Therefore, the treated water having undergone the anaerobic decomposition treatment of the organic substance in the anaerobic treatment tank 32 flows into the positive electrode chamber 12 through the segmentation member 13. If the agitating device 39 is not provided in the anaerobic treatment tank 32, a large portion of the graphene and the sludge generated in the anaerobic treatment tank 32 are enriched on the bottom of the anaerobic treatment tank 32, and the supernatant liquid does not contain these solids. Therefore, in this case, the segmentation member 13 may be omitted.

In the aerobic treatment tank 33, the oxygen is supplied into the liquid by the aeration device 23 and the aerobic environment is provided. Therefore, the aerobic decomposition of the organic substance in the liquid can be performed suitably. In the present embodiment, the positive electrode 15 is immersed in the liquid. Although the air (molecular oxygen) is supplied into the liquid by the aeration device 23, the quantity of the oxygen supplied to the surface of the positive electrode 15 is significantly reduced as compared to the case where the positive electrode 15 is exposed to the atmospheric air. Therefore, the total reaction rate of electrochemical reduction of oxygens with electrons and protons to water that consume the oxygen and the protons and produce the water at the positive electrode 15 reduces. Therefore, the graphene is introduced also into the aerobic treatment tank 33 in the present embodiment.

For instance, in a general fuel cell, when the electrochemical reaction on the positive electrode is a reduction reaction, in which the oxygen, the protons, and the electrons participate, usually, a large volume of the precious metal catalyst such as platinum is used in order to improve the reaction speed. As contrasted thereto, with the microbial power generation device 30 of the present embodiment, the reduction reaction can be prompted by the action of the graphene. Therefore, the used amount of the expensive precious metal catalyst used for the positive electrode 15 can be reduced or can be made unnecessary.

In the device 30, the aerobic microbes existing in the aerobic treatment tank 33 serve as an oxygen reduction catalyst and receive the electrons of the positive electrode 15 from the graphene holding the microbes, thereby causing reduction of the molecular oxygen supplied from the air diffusing section 23c. Accordingly, the graphene-aerobic-microbe complex in the aerobic treatment tank, which forms the electron path network on the positive electrode, and the molecular oxygen contact each other efficiently not only on the positive electrode 15, thereby enabling the oxygen reduction reaction widely. In various parts in the positive electrode chamber 12, the graphene intervenes and promotes the oxygen reduction reaction by the microbes using the protons and the electrons. Therefore, the electric power production can be improved as compared to the case where the electric power production is performed by the electrochemical reaction only on the surface of the positive electrode 15. The positive electrode 15 may be installed at the air-liquid interface of the aerobic treatment tank as an air electrode using the platinum as the oxygen reduction catalyst.

The graphene introduced into the aerobic treatment tank 33 may be produced in the anaerobic treatment tank 32. Alternatively, the graphene may be produced from the graphene oxide using microbes in a reaction tank different from the anaerobic treatment tank 32 (for instance, graphene may be produced by using graphene producing device 40 mentioned later).

A discharge port 33a is formed in a downstream wall portion of the aerobic treatment tank 33 for discharging the treated water from the aerobic treatment tank 33. The discharge port 33a provides communication between the introduction tank 35, which is formed adjacently to the aerobic treatment tank 33, and the aerobic treatment tank 33. The introduction tank 35 is a flow passage connecting the settling tank 36, which is provided downstream the aerobic treatment tank 33, with the aerobic treatment tank 33. The introduction tank 35 is connected to the settling tank 36 by a downstream opening 35a formed on a side opposite to the discharge port 33a. Thus, the treated water having undergone the treatment in the aerobic treatment tank 33 flows into the settling tank 36. In the present embodiment, the introduction tank 35 is designed not to store the treated water from the aerobic treatment tank 33. Alternatively, the introduction tank 35 may be formed to be able to store the treated water temporarily before the settling tank 36. In addition, a flocculant addition mechanism and an agitating mechanism may be provided to the introduction tank 35 to promote the formation of the sludge flocks.

The settling tank 36 has a sludge settling section 36a formed in the shape of a reversed cone. A sludge withdrawal tube 37 is provided to the bottom of the sludge settling section 36a. The sludge containing the graphene flows into the settling tank 36 from the aerobic treatment tank 33 together with the treated water. The inflowing sludge settles and deposits in the sludge settling section 36a. The deposited sludge is drawn out through the sludge withdrawal tube 37. The sludge withdrawal tube 37 branches into two directions downstream. One of the branches is connected to a return line 38a, and the other one is connected to a discharge line 38b. Part of the sludge drawn out through the sludge withdrawal tube 37 is pressure-fed inside the return line 38a by a pump (not shown) and is input to the aerobic treatment tank 33 from a terminal end of the return line 38a. The sludge flowing into the discharge line 38b is taken out of the system.

A discharge port 36b communicating with the outside downstream is formed in an upper part of the settling tank 36. A supernatant liquid of the treated water stored in the settling tank 36 is discharged through the discharge port 36b out of the device. Thus, with the microbial power generation device 30 according to the third embodiment, the power generation can be performed while performing the wastewater treatment.

Furthermore, if the wastewater treatment is performed with the microbial power generation device 30 while obtaining the electrons from the microbes, excessive growth of the microbes can be suppressed. As a result, the generation amount of the sludge can be reduced.

The microbial power generation device and the electric power producing method using the microbes according to the present invention can be realized by adding the graphene oxide and providing the negative electrode to the anaerobic treatment tank that performs the anaerobic treatment, by providing the positive electrode to the treatment tank that performs the aerobic treatment, and by electrically connecting the two electrodes via the external circuit. Therefore, the construction of the existing wastewater treatment facility can be used as it is. As a result, the electric power production can be realized easily at a low cost without necessitating large-scale facility investment.

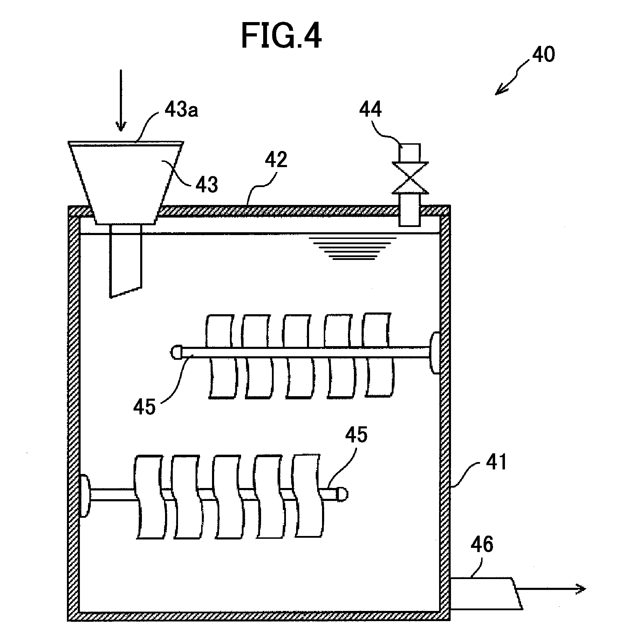

Fig. 4 is a diagram showing a schematic construction of a graphene producing device annexed to the microbial power generation device 30. The microbial power generation device 30 is formed to have a capacity enabling use in a house to large-scale wastewater treatment. Therefore, the quantity of the graphene, which should be held in the anaerobic treatment tank 32, is also large according to the capacity of the treatment tank. If the graphene is produced directly in the anaerobic treatment tank 32, there is a time lag before the graphene oxide is reduced to the graphene by the reducing microbes. Therefore, it can take time before the power generation is started (or before desired electric power is obtained). Therefore, in order to be able to input a necessary quantity of the graphene to the anaerobic treatment tank 32 appropriately, a graphene producing device 40 for producing the graphene outside the microbial power generation device 30 beforehand is installed together.

As shown in Fig. 4, the graphene producing device 40 has a reaction tank 41 in the shape of a cylinder with a bottom and a cover 42 covering the reaction tank 41. The reaction tank 41 is constituted to be able to store the liquid inside. Two agitating devices 45 are provided in the reaction tank 41. The agitating device 45 has a shaft rotatably supported by a pedestal fixed to an inner surface of a side wall of the reaction tank 41 and a plurality of agitating impellers substantially in the shape of rectangular plates attached to a periphery of the shaft at a predetermined interval. Each agitating impeller is fixed to the periphery of the shaft at a central portion of the agitating impeller with respect to a longitudinal direction thereof and protrudes outward from the axis of the shaft. Therefore, the liquid stored in the reaction tank 41 is agitated with the rotation of the shaft. The two agitating devices 45 are arranged at certain positions for preventing the agitating impellers of the agitating devices 45 from contacting each other.

An input hopper 43 having an input slot substantially in the shape of a reversed truncated cone and an introduction tube extending from the bottom surface of the input slot toward the inside of the reaction tank 41 are provided near a left side end of the cover 42. A lid 43a, which can be opened and closed, is provided on an upper face of the input port of the input hopper 43. The input hopper 43 guides the organic substance used as the substrate, the graphene oxide, the water, the slurry as the support for the microbes, the soil, the wastewater and the like into the reaction tank 41.

Moreover, an on-off valve 44 is provided near a right side end section of the cover 42 for discharging a gas, which accumulates in the reaction tank 41, to the outside. Thus, the gas enriched in the reaction tank 41 can be discharged suitably.

In order to prevent the air from entering the reaction tank 41 through gaps between the peripheral surface of the input hopper 43 or the on-off valve 44 and the inner peripheral surface of the cover 42, through which the input hopper 43 and the on-off valve 44 penetrate, airtightness is secured in these penetrating portions in the cover 42 using a sealing material such as an O ring or putty.

A discharge pipe 46 is provided to a lower portion of the reaction tank 41 for discharging the content in the reaction tank 41 to the outside. A valve, which is formed to be opened and closed, is provided in the discharge pipe 46 and can be opened by operator's handling. A large volume of the liquid (aqueous liquid) is stored in the reaction tank 41 to the degree that the reaction tank 41 is filled substantially fully with the liquid. The produced graphene is in the form of flocks, to which the microbes adhere. Therefore, the graphene can be taken to the outside easily by discharging the water from the discharge port 46.

In the case where the graphene is input to the microbial power generation device 30, the graphene is produced in the reaction tank 41 using the raw water (wastewater) introduced into the microbial power generation device 30. Accordingly, the optimal microbial community that adapts itself to the raw water treated with the microbial power generation device 30 can be enriched. Thus, a large volume of the graphene can be produced with the microbes. Therefore, the graphene produced with the device 40 can be introduced into the anaerobic treatment tank 32 and the aerobic treatment tank 33, and the wastewater treatment can be performed smoothly. As a result, further preferable power generation properties can be realized.

Various sensors such as a temperature sensor for measuring temperature of the reaction tank 41, an oxygen concentration sensor for measuring oxygen concentration in the reaction tank 41, and a pH sensor for measuring pH of the organic waste in the reaction tank 41 may be provided to manage the state in the reaction tank 41.

Also in the case of the microbial power generation devices 1, 20 of the first and second embodiments, the graphene may be produced by the microbial reduction outside the microbial power generation devices 1, 20 using the graphene producing device 40, and the graphene obtained beforehand may be input to the negative electrode chamber 11.

As explained above, the microbes (reducing microbes) that reduce the graphene oxide are enriched in the microbial power generation devices 1, 20, 30 among the microbes that inhabit the wastewater, the slurry or the activated sludge, for instance. Thus, diversity of the microbes can be secured. Therefore, even if the wastewater containing various types of organic substances is used as the fuel, the various microbes can decompose the various types of organic substances, whereby the power generation can be performed stably.

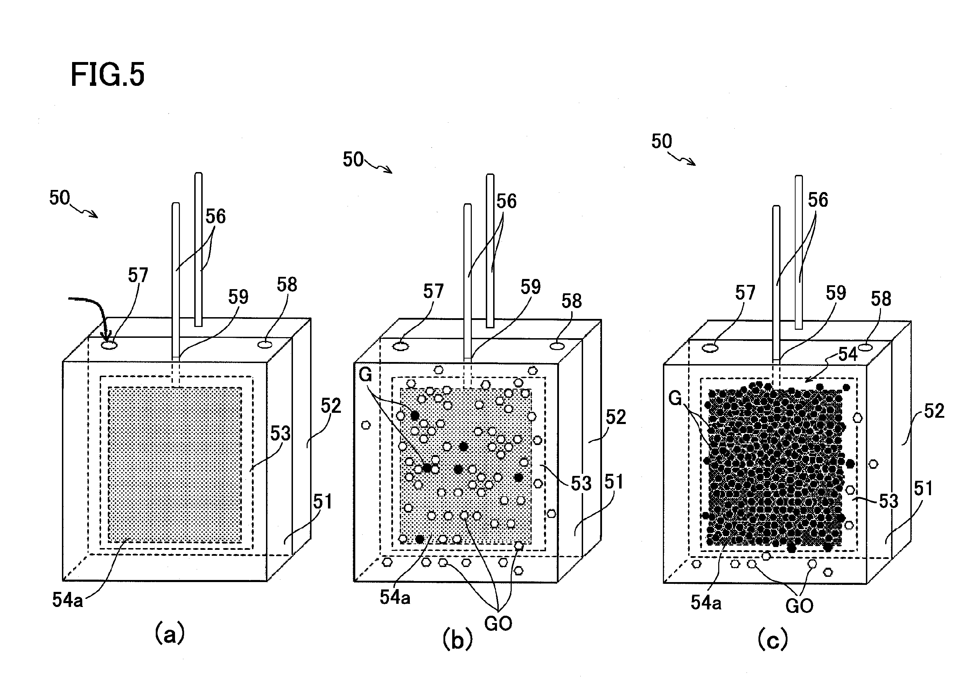

Next, an electrode for the microbial power generation device according to the embodiment of the present invention and a preparing method of the same will be explained with reference to Fig. 5.

Fig. 5 is a diagram illustrating an outline of the electrode for the microbial power generation device of the embodiment of the present invention and the preparing method of the same.

As shown in Fig. 5, specifically, the microbial power generation device 50 has a negative electrode chamber 51, a positive electrode 52 and a cation permeating membrane (proton conducting membrane 53).

The negative electrode chamber 51 has a casing with a rectangular contour. A backside of the negative electrode chamber 51 on a positive electrode 52 side is opened except for its end periphery. The opening is covered with the proton conducting membrane 53 by using the periphery of the opening as a margin for adhesion. An introduction port 57 for introducing a raw material, a discharge port 58 for discharging gases or surplus liquid, a drawing port 59 for drawing out a conducting wire 56 are formed in an upper face of the casing of the negative electrode chamber 51 to penetrate through the upper face.

A conductive member used as a support for a graphene electrode 54 is suspended in the negative electrode chamber 51. A carbon cloth 54a is used for the conductive member in the present embodiment. The conducting wire 56 is connected and fixed to an upper end of the carbon cloth 54a. The conducting wire 56 extends from the drawing port 59 to the outside of the negative electrode chamber 51.

The positive electrode 52 is a carbon paper electrode supporting the platinum or a platinum electrode and is processed in a rectangular shape. A conducting wire 56 is connected to the upper end of the positive electrode 52. The positive electrode 52 is constituted as a so-called air cathode. The positive electrode 52 is provided to face the negative electrode chamber 51 through the proton conducting membrane 53.

In the preparation of the graphene electrode, first, the carbon cloth 54a fixed with the conducting wire 56 is inserted into the negative electrode chamber 51 from the opening of the negative electrode chamber 51. Then, after the conducting wire is drawn out of the drawing port 59, the carbon cloth 54a is fixed in a suspended state. Then, the proton conducting membrane 53 is positioned to cover the opening and is adhered to the backside of the negative electrode chamber 51. In order to prevent leakage of the liquid from the adhered surfaces, a sealing agent is used suitably to fix the proton conducting membrane 53. Thereafter, the positive electrode 52 is fixed in close contact with the proton conducting membrane 53. Thus, the casing of the microbial power generation device 50 is assembled (refer to Fig. 5(a)).

Then, predetermined quantities of the slurry, the sludge, the soil, the aqueous sediment and the like are input to the negative electrode chamber 51 through the introduction port 57. Then, the water solution containing the graphene oxide and the organic substance is input, whereby the inside of the negative electrode chamber 51 is filled with the liquid. Thus, an anaerobic atmosphere is provided in the negative electrode chamber 51. The microbes inhabit the slurry, the sludge, the soil, the aqueous sediment and the like, which are input. Therefore, the microbes using the graphene oxide as the electron acceptor accumulate, and thus, the graphene oxide is reduced to the graphene (refer to Fig. 5(b)). In Fig. 5(b) and Fig. 5(c), white hexagon GO schematically indicates the graphene oxide, and black hexagon G schematically indicates the graphene. Alternatively, a mixture of predetermined quantities of the slurry, the sludge, the soil, the aqueous sediment and the like and the water solution containing the graphene oxide and the organic substance may be installed in the anaerobic atmosphere using another container or another device (for instance, above-mentioned graphene producing device 40) in advance. Then, the produced graphene may be input to the negative electrode chamber 51 as the source for ingestion of the microbes in place for predetermined quantities of the slurry, the sludge, the soil, the aqueous sediment and the like.

The graphene oxide is hydrophilic and disperses well in the water. As contrasted thereto, the graphene is hydrophobic and aggregates, so the graphene adheres to and accumulates on the carbon cloth. The microbes (reducing microbes) participated in the production of the graphene adhere to the graphene. The microbes are stacked on the carbon cloth as they are and integrated with the carbon cloth to form the graphene electrode 54 (refer to Fig. 5(c)). Thus, an electrode for the microbial power generation device (graphene electrode 54) can be obtained. The graphene is an electron-conducting material superior to the graphite or the metal. The electrode of the present embodiment, on which the graphene is enriched, serves as an excellent electrode. The reducing microbes attached by the reduced graphene electrode 54 perform extracellular electron transfer. That is, the graphene electrode 54 is structured to support the microbes functioning as the catalyst for taking out the electrons. The graphene electrode 54 has current production efficiency superior to an electrode simply made of a conductive material.

A current flows if the conducting wire 56 connected to the positive electrode 52 is electrically connected to the conducting wire 56 extending from the negative electrode chamber 51. Therefore, the microbial power generation device 50 can be used as a battery as it is. The microbial power generation device 50 can generate power continuously if the substrate is additionally input from the introduction port 57 into the negative electrode chamber 51. The additionally input substrate may be different from the substrate used for producing the graphene. For instance, in order to improve the electric power, glucose or the like having lower oxidation-reduction potential (i.e., better electrical energy recovery ratio) than the acetic acid may be used.

Furthermore, by adjusting the quantity of the input graphene oxide, the graphene electrode 54 can be formed in the entire negative electrode chamber 51. In other words, the entire negative electrode chamber 51 can function as the electrode. The formed graphene electrode 54 has a dense-sparse aggregation structure formed by adhesion of the reducing microbes. Therefore, the aqueous liquid can be caused to flow into the voids in the electrode structure. Thus, the substrate, the reducing microbes and the graphene can be brought into contact with each other efficiently, thereby improving the electric power that can be generated.

Furthermore, the produced graphene spontaneously accumulates and forms a structure. Therefore, the graphene electrode 54 can be formed in a predetermined place in the negative electrode chamber 51. If the graphene electrode 54 is prepared by separating the support (carbon cloth 54a or the like) from the positive electrode 52 by at least a predetermined distance in a container, the positive electrode 52 and the graphene electrode 54 do not provide conduction therebetween through the produced graphene. In that case, a battery structure that does not require the proton conducting membrane 53 can be provided. As such a container, for instance, a T-tube or the like may be employed as in an example embodiment described later.

The preparing method of the electrode for the microbial power generation device according to the above-mentioned embodiment prepares the electrode in the microbial power generation device 50 such that the power can be generated using the prepared electrode as it is. Alternatively, the electrode may be prepared in another container. In this case, a container having a bottom capable of storing a liquid may be used. Predetermined quantities of the slurry, the sludge, the soil, the aqueous sediment and the like, the graphene oxide, and the water solution containing the substrate such as the acetic acid are input to the container. If the container is put in a stationary state, the produced graphene aggregates in the container and integrates in the form corresponding to an inside shape of the container. Accordingly, by introducing a material that becomes a conducting wire in the container beforehand, the graphene electrode embedded with the conducting wire can be prepared. Examples of the material of the conducting wire include metallic materials such as a platinum coil, a platinum wire and a copper wire. Thus, the prepared graphene electrode can be obtained as a single body. The graphene electrode can be taken out of the container and can be used as the electrode for another microbial fuel cell.

The electrode prepared by the above-mentioned preparing method is excellent as the electrode for the microbial power generation devices as mentioned above. The use is not limited to the electrode of the microbial power generation device. Rather, the electrode can be used as an ordinary electrode in other devices.

The construction of the invention concerning the electric power producing method using the microbes corresponds to the method for producing the electric power with each of the above-mentioned microbial power generation devices 1, 20, 30 of the first to third embodiments. The mode of the graphene adhering to and accumulating on the surface of the graphite sheet 54a together with the microbes corresponds to a conductive structure described in a construction of the invention concerning the electrode for the microbial power generation device and the invention concerning the preparing method of the same. The step of inputting the predetermined quantities of the slurry, the sludge, the soil and the like to the negative electrode chamber 51, then filling the inside of the negative electrode chamber 51 with the liquid by inputting the water solution containing the graphene oxide and the acetic acid as the substrate, and accumulating the microbes using the graphene oxide as the electron acceptor in the anaerobic atmosphere in the embodiment of the preparing method of the above-mentioned electrode for the microbial power generation device corresponds to a culturing step described in a construction of the invention concerning the preparing method of the electrode for the microbial power generation device.

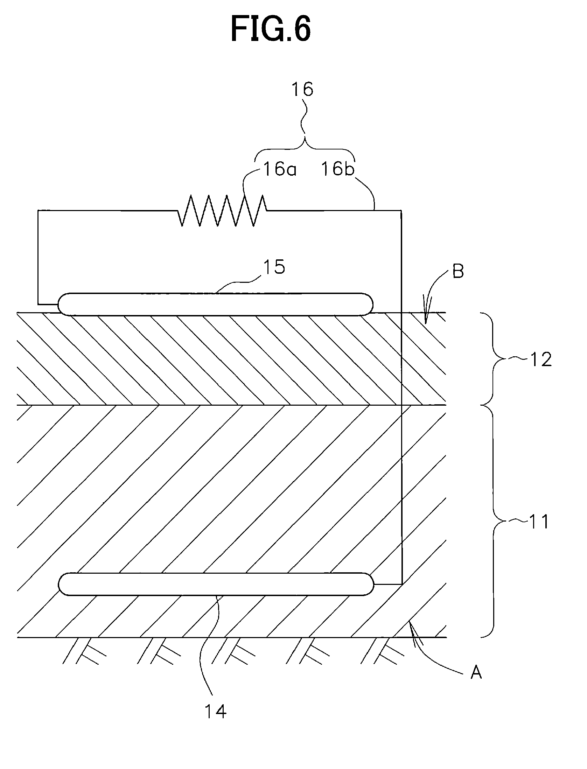

Next, application examples (modifications of embodiment) of the above-mentioned microbial power generation device will be explained. Fig. 6 is a diagram showing a state of constructing the microbial power generation device as a so-called soil battery. As shown in the diagram, two kinds of different soil A and soil B are adjusted, and both are zoned and layered. The lower layer soil A is made by inputting the graphene oxide to the soil, the slurry, the sludge, the aqueous sediment and the like containing the organic substance. The upper layer soil B is constituted with the soil, the slurry, the sludge, the aqueous sediments and the like added with no graphene oxide. By stacking the soil B above the soil A, the soil A is blocked from the open air and can exist under the anaerobic environment. By culturing or supplying the anaerobes in or to the soil A, the organic substance is metabolized in the soil A, and the electrons are generated in the soil A. As contrasted thereto, the soil B is in contact with the open air and can be in the aerobic environment. A sufficient quantity of the liquid (not shown) such as water is supplied to both the soil A and the soil B, so the protons produced as the metabolite of the microbes in the lower layer soil A can move into the upper layer soil B. The negative electrode 14 is buried in the soil A, and the positive electrode 15 is installed on the surface of the soil B. A power generation device (soil battery) is formed by connecting the negative electrode 14 and the positive electrode 15 through the external circuit 16. In this case, in order to obtain supply of the oxygen, at least a part of the positive electrode 15 is exposed from the surface of the soil B.

With the above construction, a negative electrode area (negative electrode chamber) 11 is formed in the range of the lower layer soil A, and a positive electrode area (positive electrode chamber) 12 is formed in the range of the upper layer soil B. The above-mentioned application example does not have any segmentation member in the boundary between the negative electrode area (negative electrode chamber) 11 and the positive electrode area (positive electrode chamber) 12. It is because the above-mentioned application example is an example in which the segmentation member can be omitted in the case where the negative electrode area (negative electrode chamber) 11 contains lots of solids. In this application example, inflow of the graphene and the microbes from the negative electrode area (negative electrode chamber) 11 to the positive electrode area (positive electrode chamber) 12 can be suppressed, so the segmentation member is omitted. The drawing of the application example does not show a construction for inputting the soils A and the soil B into any specific containers but shows a construction for constructing the soil A and the soil B in the outdoor ground surface. In this way, by using the outdoor ground surface, a soil battery on a vast area can be constructed. In addition, naturally, it is also possible to manufacture a soil battery that uses a container having a bottom with a similar construction.

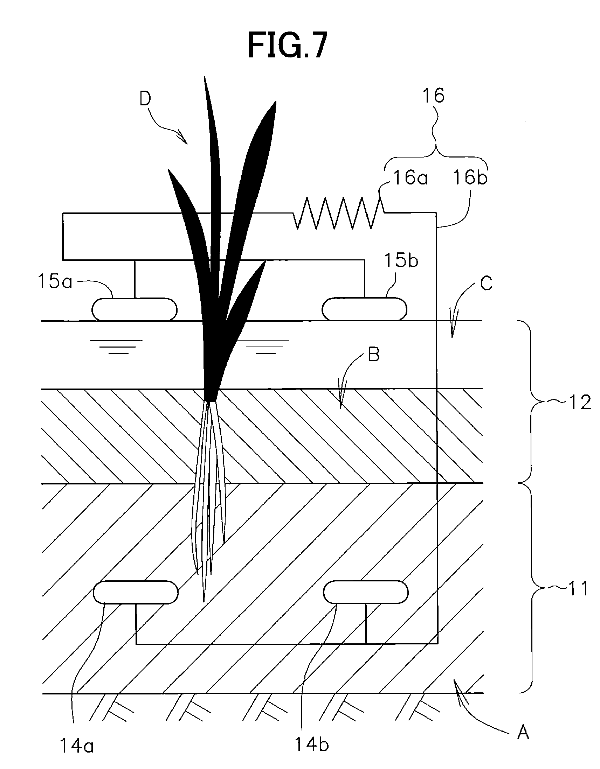

Next, another application example (further modification) will be explained. Fig. 7 is a diagram showing an example constituted as a so-called plant battery (for instance, rice fuel cell using rice). Two soils A and B are similar to those of the example of the soil battery. The graphene oxide is input to the lower layer soil A, and the graphene oxide is not input to the upper layer soil B. Therefore, by covering the lower layer soil A with the upper layer soil B, the lower layer soil A can be put under the anaerobic environment, and the range of the soil A is constructed as the negative electrode area (negative electrode chamber) 11. That is, the organic substance can be metabolized by the anaerobes in the lower layer soil. Both of the soils A and B are permeated with a sufficient quantity of the liquid such as water. The liquid is supplied to the degree that the liquid covers the upper layer soil B. With the liquid such as water, a layer (hereafter, referred to as liquid layer) C consisting of the liquid such as water is caused to flow into an area above the upper layer soil B. The liquid layer C and the upper layer soil B constitute the positive electrode area (positive electrode chamber) 12. Thus, the protons generated by the above-mentioned metabolism can be moved to the liquid layer C. Although the upper layer soil B is not in contact with the open air, the soil B can be brought into the aerobic environment by dissolved oxygen in the liquid layer C. When the aerobic condition is insufficient, the liquid layer C may be aerated. In the above construction, negative electrodes 14a, 14b are buried in the lower layer soil A, and positive electrodes 15a, 15b are floated on the surface of the liquid layer C. A power generation device (plant battery) can be formed by connecting the negative electrodes 14a, 14b and the positive electrodes 15a, 15b through the external circuit 16.

The plant D used in this application example should be preferably a aquatic plant. For instance, rice and the like that photosynthesize comparatively actively are desirable. That is, it is necessary to supply a liquid such as water enough to transfer the protons, which are generated in the negative electrode area (negative electrode chamber) 11, to the positive electrode area (positive electrode chamber). There is a possibility that other plant than the aquatic plant cannot grow. If the plant D grows, the organic compound produced by the photosynthesis of the plant D is released into the soil from roots. Therefore, even without additionally supplying the organic substance to the soil A, the environment enabling the metabolism of the microbes can be provided. That is, the function as the battery can be exerted for a long time. Since the roots of the plant D extend downward with the growth of the plant D, it is sufficient to plant the plant D in the soil B. By planting the plant D such that the roots reach the lower layer soil A, the supply of the organic substance by the plant D can be realized from an early stage.

A plurality of the negative electrodes 14a, 14b and the positive electrodes 15a, 15b are installed respectively in order not to hinder the growth of the roots, stems, leaves and the like of the plant D. When the plurality of electrodes are used as in the diagram, the electrodes of the same polarity may be connected with each other in series. Although two comparatively small electrodes are connected in series in this application example, the size and the number of the electrodes may be suitably determined according to conditions of the plant to be planted such as a kind and the number thereof. In this application example, an outdoor ground surface (such as paddy field) is used to construct the plant battery in a vast area. Alternatively, the plant battery may be constituted by using a container with a bottom. Paddy soil may be used for the soils A and B.

Thus, the present invention has been explained based on the embodiments. The present invention is not limited to the above embodiments at all. It would be easily conceived that various improvements and modifications to the embodiments within a scope not departing from the gist of the present invention are possible.

For instance, in each of the microbial power generation devices 1, 20, 30 as the embodiments of the present invention, the single negative electrode chamber 11 (anaerobic treatment tank 32) and the single positive electrode chamber 12 (aerobic treatment tank 33) are used. The numbers of the negative electrode chamber and the number of positive electrode chamber are not limited like that. Alternatively, a plurality of them may be provided. In that case, the device is constructed such that the air is supplied to each of the positive electrode chambers 12 with the aeration device(s) 23 respectively in order to maintain the aerobic environment of the positive electrode chambers 12. In each of the above microbial power generation devices 1, 20, 30, the single electrode is provided to each chamber or each tank. Alternatively, a plurality of electrodes may be provided to each chamber or each tank. In the above explanation, the microbial power generation devices 1, 20 do not have the graphene in the positive electrode chamber 12. Alternatively, the graphene may be introduced into the positive electrode chamber 12. In that case, the microbial power generation device 20 corresponds to the fifth construction of the invention concerning the microbial power generation device.

### [Example embodiment]

Hereinafter, further explanation will be given in more details with reference to example embodiments. The present invention should not be limited to these example embodiments.

### (Example embodiment 1)

The graphene oxide was produced with the method described in the Nature Nanotechnology volume 4, pages 25-29 by V.C. Tung, M.J. Allen, Y. Yang and R.B. Kaner, issued 2009. The graphene oxide was adjusted to 4g-dry ·L⁻¹, thereby preparing a graphene oxide stock solution.

Paddy soil was used as the source of inoculum of the microbes for the power generation examination using the graphene oxide reduction microbes (referred to simply as GO reducing microbes, hereafter) that reduce the graphene oxide. Distilled water was added to the soil to make the soil slurry. The soil slurry was passed through a screen having the diameter of 2.0mm and adjusted such that the moisture content became 35%. The soil slurry was sealed in a plastic bag and maintained at 22 degree Celsius under a submerged condition.

The AGO-FS culture medium used for the power generation examination using the GO reducing microbes was adjusted as follows. Composition of the AGO-FS culture medium is shown in Table 1.

**[Table 1]**

| AGO-FS culture medium | |
|---|---|
| Gas phase: 80% Nitrogen + 20% Carbon dioxide (v/v) per 1L | |
| Base culture medium | 20 ml |
| 4g/L GO solution | 0.3 ml |
| 1M Sodium acetate solution | 0.2 ml |
| 0.3M FeS solution | 0.2 ml |
| **** Vitamin solution | 0.2 ml |

| Base culture medium A (L⁻¹) | |
|---|---|
| NaCl | 1 g |
| KCl | 0.5 g |
| NH₄Cl | 0.5 g |
| CaCl₂·2H₂O | 0.1 g |
| MgCl₂·6H₂O | 0.1 g |
| KH₂PO₄ | 0.2 g |
| NaHCO₃ | 2.5 g |
| * Trace element group SL-10 | 1 ml |
| **Selenium · tungsten solution | 0.5 ml |
| *** Resazurin solution | 0.2 ml |

| *Trace element group SL-10 (L⁻¹) | |
|---|---|
| 25% HCl | 10 ml |
| FeCl₂·4H₂O | 1.5 g |
| ZnCl₂ | 0.07 g |
| MnCl₂·4H₂O | 0.1 g |
| H₂BO₃ | 6 mg |
| CoCl₂·6H₂O | 0.19 g |
| CuCl₂·2H₂O | 2 mg |
| NiCl₂·6H₂O | 0.024 g |
| Na₂MoO₂·2H₂O | 0.036 g |

| ** Selenium ·tungsten solution (0.5L⁻¹) | |
|---|---|
| NaOH | 0.5 g |
| NaSeO₃·5H₂O | 3 mg |
| Na₂WO₄·2H₂O | 4 mg |

| *** Resazurin solution (L⁻¹) | |
|---|---|
| Resazurin sodium | 1 g |

| **** Vitamin solution (L⁻¹) | |
|---|---|
| Biotin | 20 mg |
| Folic acid | 20 mg |
| Pyridoxine ·HCl | 100 mg |
| Thiamine ·HCl ·2H₂O | 50 mg |
| Riboflavin | 50 mg |
| Nicotinic acid | 50 mg |
| D ·Ca · pantothenate | 50 mg |
| Vitamin B12 | 50 mg |
| PABA | 50 mg |
| Thioctic acid | 50 mg |
| nicotinamide | 50 mg |
| lipoic acid | 50 mg |
| hemin | 50 mg |
| 1,2-naphthoquinone | 50 mg |

First, the mineral salts indicated in Table 1 were dissolved in distilled water, and the solution was heated to approximately 80 degree Celsius. Then, aeration with the nitrogen gas was performed for 30 to 60 minutes until temperature of the solution decreases to room temperature. A necessary quantity of the solution was divided and poured into a glass vial. Then, aeration with the gas was performed for approximately 5 to 15 minutes again and the glass vial was sealed and fixed with a butyl rubber plug and an aluminum seal. Then, autoclave sterilization (121 degree Celsius, 15 minutes) was performed.

The GO reduction microbial power generation examination was performed as follows. Approximately 60g of the paddy soil and approximately 40mL of the graphene oxide dilute solution were mixed, kneaded and added such that the eventual concentration of the graphene oxide became approximately 0.1g/L. At the start of the culture, 10mM of glucose was further added as an electron donor to the AGO-FS culture medium (but eventual graphene oxide concentration was set at 0.1g/L). 50mL volume of the mixed and kneaded graphene oxide and paddy soil was input to the bottom of the battery tank of approximately 400mL capacity. Then, a graphite felt connected to a copper wire was put thereon, and further 50mL volume of the mixed and kneaded graphene oxide and paddy soil was input. Further, above them, approximately 200mL of the paddy soil added with no graphene oxide was added, and a graphite felt connected to a copper wire was put on an upper portion of the paddy soil, and, when necessary, was connected with the graphite felt laid on the bottom by a copper wire via a resistance and a voltmeter or an ammeter. The production amount of the electricity was calculated by measuring the voltage between the two electrodes using a resistance of 100 to 10KΩ.

For comparison, a culture medium added with no graphene oxide, to which 40mL of the distilled water was added, was used instead of the graphene oxide stock solution. Other than that, the culture medium was prepared on the same conditions as the example embodiment 1 and was prepared as a comparative example 1.

The result of the GO reduction microbial power generation examination was as follows. The electric power was equal to zero on the zeroth day of the culture but was 2µW/cm² for the culture added with no graphene oxide and was approximately 10µW/cm² for the culture added with the graphene oxide on the third or fourth day after the start of the culture. Thus, the effect of promoting the electric power production by the addition of the graphene oxide was observed. Furthermore, in the culture added with the graphene oxide, apparent blackening of the culture in the bottom, where the graphene oxide was mixed and kneaded, was observed. Thus, it was visually confirmed that the graphene oxide was reduced to the graphene. The graphene oxide is brown substance dispersed well in the water but changes to hydrophobic black structure if the graphene oxide is reduced to the graphene. In this way, the graphene oxide in the culture added with the graphene oxide is reduced to the graphene, which has excellent electrical conductivity, due to the microbial metabolism, so the electrode becomes a fluid electrode having quite excellent contact efficiency for the microbes. Thus, it was suggested that an electronic path from the microbes to the graphite electrode (negative electrode) was formed, and the electric power production capacity was improved.

### (Example embodiment 2)

Riverine sediment, irrigation canal slurry, paddy soil and sea sand were used for the source of the inoculum of the microbes of enriched culture examination of the GO reducing microbes. The culture medium indicated in Table 1 was prepared as mentioned above. The riverine sediment, the irrigation canal slurry, the paddy soil and the sea sand of approximately 0.5g by dry weight per each were added, and stationary culture was performed at 28 degree Celsius. Occurrence of the reduction of the graphene oxide was determined by visual observation of the existence of the hydrophobic black structure (aggregate of graphene). The culture forming the hydrophobic black structure was determined to be the GO reduction microbial culture. After three to ten days of the culture, 1mL of the GO reduction microbial culture that formed the hydrophobic black structure was extracted and input in a new AGO-FS culture medium, whereby subculture was repeated. Microbes in the culture were detected by performing nucleic acid fluorescent staining using ProLong Gold antifade reagent with DAPI (Invitrogen) and observing under a microscope. Also, 2µL of a solution, which was acidified by mixing 85% phosphoric acid of the same quantity as the culture fluid, was poured into a gas chromatographic assay device GC-2014 (SHIMADZU) equipped with a FID detector and a Unisole F-200 30/60 glass column, whereby concentration of the acetic acid in the culture was measured. At that time, nitrogen was used as a carrier gas, column temperature was set at 200 degree Celsius, and temperature of a pouring hole and the detector was set at 250 degree Celsius.

Furthermore, for comparison, a culture added with an inoculum having undergone autoclave sterilization, a culture added with no sodium acetate, a culture added with no graphene oxide, and a culture added with neither acetic acid nor graphene oxide were prepared as comparative example 2. The other conditions for preparation were the same as the example embodiment 2.

In every culture prepared as the example embodiment 2, formation of the graphene-like black structure was observed for every inoculum source. As contrasted thereto, formation of the black structure was not observed in the culture added with the environmental specimen having undergone the autoclave sterilization of the comparative example 2. Thus, it was suggested that the reduction of the graphene oxide was caused by a biologic reaction in the example embodiment 2, and the microbes that assume the reduction of the graphene oxide exist universally in the environment.

Further, the change in the concentration of the acetic acid before and after the reduction of the graphene oxide was examined using the culture, in which the riverine sediment origin GO reducing microbes were subcultured. As a result, it was found that the acetic acid was not consumed in the culture added with no graphene oxide of the comparative example 2, but 1 to 2mM of the sodium acetate was consumed in the culture added with the graphene oxide of the example embodiment 2. Furthermore, the microbes in the culture were observed with the microscope, and microbial growth by 100 to 300 times was observed only in the culture of the example embodiment 2 added with the graphene oxide and the acetic acid. As contrasted thereto, such microbial growth was not observed in the culture of the comparative example 2. Thus, it was suggested that the microbes that grow by the extracellular electron transfer breathing using the acetic acid as the electron donor and using the graphene oxide as the electron acceptor, i.e., electricity-generating microbes enabling collection of the electrons with the electrode, were enriched selectively in the culture of the example embodiment 2.

Further, the riverine sediment origin GO reduction microbe accumulation culture (i.e., culture, in which GO reducing microbes originating from riverine sediment are enriched) of the example embodiment 2 enriched by the above method was used to try formation of the electrode inside the microbial power generation device with a following method, in which a carbon cloth was used as a support. A T-shape glass cylinder tube having a branch pipe provided to a straight pipe, which is 3cm in diameter and 8cm in length, was used as a container by positioning the straight pipe in the vertical direction. A bottom portion was sealed with a glass flange and a chain clamp, and a carbon paper having platinum applied to a face thereof is fitted to a transverse opening such that the face applied with the platinum is on the outside. Further, a platinum wire was put on it and fixed with an elastomer seal and a chain clamp. Approximately 25mL of the AGO-FS culture medium, 1mL of the GO reduction microbe accumulation culture and a stirring bar with length of 50mm were input thereto. A carbon cloth sewed with a platinum wire was input and then an upper opening was sealed with a butyl rubber plug. The culture was cultured at room temperature about 25 degree Celsius while stirring the culture at 500rpm. Sampling of the culture in the container, supply of the culture medium or the electron donor into the container and the like were performed by inserting a syringe equipped with a needle through the top butyl rubber plug if needed. Moreover, the culture added with no graphene oxide of the comparative example 2 was prepared and cultured similarly.

The riverine sediment origin GO reduction microbe accumulation culture of the above-mentioned example embodiment 2 was used to determine whether the graphene oxide would be reduced to the graphene in the microbial power generation device. As a result, it was confirmed that the brown graphene oxide uniformly dispersed at the start of the culture was reduced to the graphene having the black structure and that the graphene caused spontaneous aggregation around the carbon cloth and in the bottom of the battery. Electric power was measured by connecting a resistance of 47 to 10KΩ and a voltmeter between the negative electrode of the carbon cloth and the positive electrode of the carbon paper applied with the platinum on the transverse opening. As a result, the power generation amount was 20µW/cm² in the case of the culture added with the graphene oxide of the example embodiment 2. As contrasted thereto, the power generation amount was 3.3µW/cm² in the case of the culture added with no graphene oxide of the comparative example 2. Thus, it was shown that the power generation is promoted by adding the graphene oxide also in the case of the culture that contains no soil and that is highly enriched. Further, it was shown that the electrode is formed by the spontaneous aggregation of the graphene.

Further, identification analysis of inhabiting microbes of the riverine sediment origin GO reduction microbe accumulation culture of the example embodiment 2 was performed by the 16S rRNA gene clone library method as follows. First, approximately 10mL of the culture containing the GO reducing microbes and the graphene was extracted and concentrated suspension of the same was performed in sterilized water. Then, a microbial lytic reaction using proteinase K and lysozyme was performed. DNA was extracted from the microbial lytic solution by phenol chloroform extraction and ethanol sedimentation. Subsequently, the extracted DNA was used as a template and amplified by the polymerase chain reaction (PCR) method, using a primer (27F:5' -AGAGTTTGATCCTGGCTCAG, 1492R:TACGGYTACCTTGTTACGACTT) specific to the bacterial 16S rRNA gene. The obtained PCR product was cloned using the TOPO (registered trademark) TA cloning kit (Invitrogen). A sequencing reaction of the cloned sequence was performed using BigDye (registered trademark) Terminator v3.1 Cycle Sequencing Kit (Applied biosystems), and migration was performed using a capillary sequencer (Applied biosystems).

A 16S rRNA clone library was built about the above-mentioned riverine sediment origin GO reduction microbe accumulation culture, and sequence analysis was performed about ten clones. As a result, five clones among them showed 97% or higher homology to genus Geobacter of Deltaproteobacteria class known as the electricity producing microbes. The other five clones showed 98% or higher homology to genus Desulfovibrio of the same Deltaproteobacteria class. Two clones among them were most related to Desulfovibrio vulgaris, which has an ability to reduce iron, or an ability to generate an electric current. Thus, it was shown that the electric current producing microbes can be selectively enriched by using the acetic acid and the graphene oxide as the electron donor and the acceptor.

### (Example embodiment 3)

The GO reducing microbes were isolated from the GO reduction microbe accumulation culture of the example embodiment 2 and cultured by a following method. A glass vial with the volume of 30mL containing 5mL of the AGO-FS culture medium of double concentration was prepared, and the enriched culture was continuously diluted to 10⁻¹ to 10⁻⁷ therein. Then, 5mL of 1% low melting point agarose, which was dissolved by the autoclave and then kept in a warm water bath at 40 degree Celsius, was added thereto. Then, they were shaken lightly by hand and mixed. Then, the mixture was kept cold in ice water for approximately 5 minutes to cause the mixture to turn into gel. The culture was cultured at 28 degree Celsius. After one month of the culture, colonies assuming black color due to production of the graphene-like substance were extracted and input to the AGO-FS culture medium. Then, culture was performed at 28 degree Celsius, and a culture containing a single GO reduction microbe was obtained.

The GO reduction microbe accumulation culture was used as a microbe inoculum source and mixed (poured) into a solid medium using an agarose culture medium, whereby isolation culture was performed. As a result, reduction of the graphene oxide in the solid medium was observed. In addition, the part changed to black was inoculated into a liquid culture medium and cultured again, whereby reduction of the graphene oxide was observed. Thus, it was suggested that the GO reducing microbes can be isolated efficiently from the environment by using the agarose medium the graphene oxide.

### (Example embodiment 4)

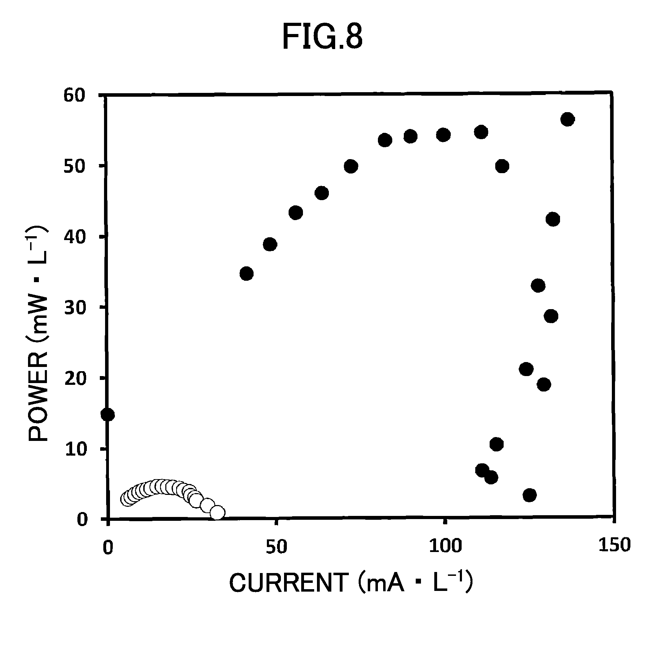

In the present embodiment, the graphene electrode was prepared in a container different from the microbial battery. The graphene oxide at a final concentration of 0.25g/L was input to the GO reduction microbe accumulation culture of the example embodiment 2, and stationary culture of 0.9L of the culture was performed in a closed container under the environment of 28 degree Celsius for ten days. The graphene oxide was dispersed uniformly before the culture, but after the culture, a mixture of the graphene and the GO reducing microbes in the form of an agglomerate substantially in a circular columnar shape of 3cm in diameter and 3cm in height formed by spontaneous aggregation was obtained. An electric power production amount by the microbial power generation device in the case where the mixture was used as the electrode on the negative electrode side was measured. The microbial power generation device like the example embodiment 1 was used, and the above-mentioned mixture was taken out of the container and used as the electrode on the negative electrode side. The electric power production amount was calculated by measuring a voltage between the electrodes using a resistance of 10kΩ to 1Ω. For comparison, a microbial power generation device using a graphite felt as an electrode on a negative electrode side was prepared. A case where a graphene electrode was prepared from introduced graphene oxide in the power generation device was used as a comparative example. The result is shown in Fig. 8. A black circle mark in the drawing indicates the case of the electrode prepared in the present example embodiment, and a white circle mark indicates the comparative example.

As apparently shown in Fig. 8, the maximum electric power of 50mW/L or higher was generated in the case where the electrode prepared according to the present example embodiment was used. As compared to the case where the graphene electrode was prepared inside the microbial power generation device, approximately 10 times higher effect to promote the electric power production was observed.

### (Example embodiment 5)

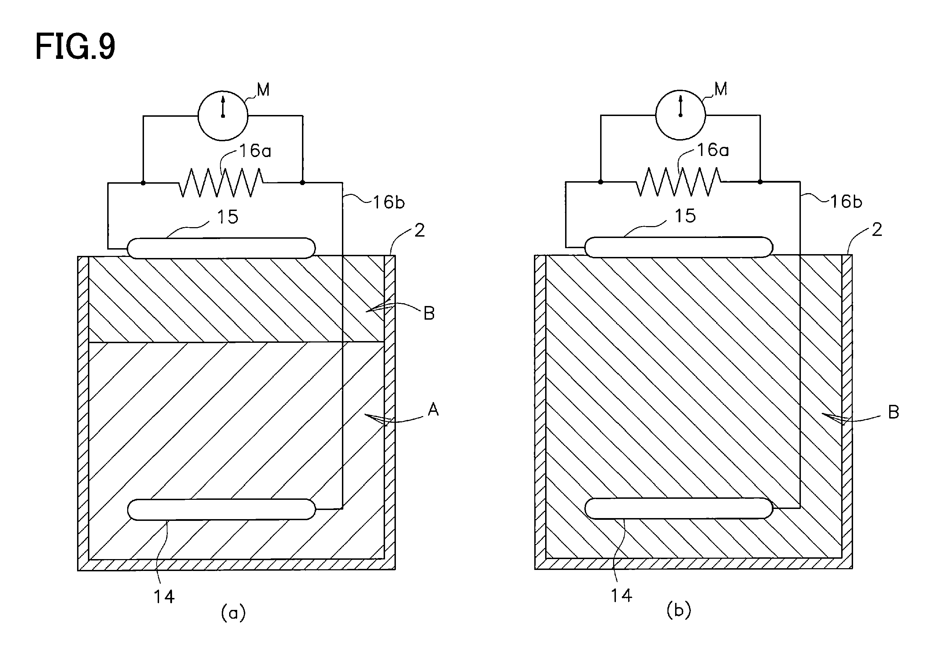

In the present example embodiment, a soil battery using soil added with the graphene oxide was manufactured. Two kinds of soil were adjusted as the soil to be used. One kind was soil A added with the graphene oxide, and the other kind was soil B added with no graphene oxide. The soil A added with the graphene oxide was prepared by adding 150 to 200mL of distilled water, 1g of the graphene oxide and 10mM of sodium acetate to 300g of marketed horticultural soil, adjusting pH to 7.0, and fully mixing and kneading the soil. The soil B added with no graphene oxide was prepared by adding 100mL of distilled water and 10mM of sodium acetate to 200g of similar marketed horticultural soil, adjusting pH to 7.0, and fully mixing and kneading the soil. The soil battery of the present example embodiment has a construction as shown in Fig. 9(a). As a manufacturing method thereof, first, approximately 100g of the soil A added with the graphene oxide was input to a glass container of 500mL. A graphite felt (negative electrode) 14 connected with a conducting wire was laid on the surface of the soil A. Then, approximately 200g of the soil A added with the graphene oxide was input onto the graphite felt 14. Further, 200g of the soil B added with no graphene oxide was input thereon. Then, the container was sealed to prevent the surface soil from contacting the atmospheric air, and culture was performed for ten days under the environment of 28 degree Cersius. After the culture, the sealing was removed and a graphite felt (positive electrode) 15 connected with a conducting wire was put onto the surface of the soil B added with no graphene oxide. An electric power production amount was measured while performing the culture under the environment of 28 degree Cersius. In addition, for comparison, a comparative example shown in Fig. 9(b) was prepared. As a manufacturing method of the comparative example, the soil B added with no graphene oxide was added in place for the soil A added with the graphene oxide input in the example embodiment 5, and the other conditions of the manufacture were the same as the example embodiment 5.

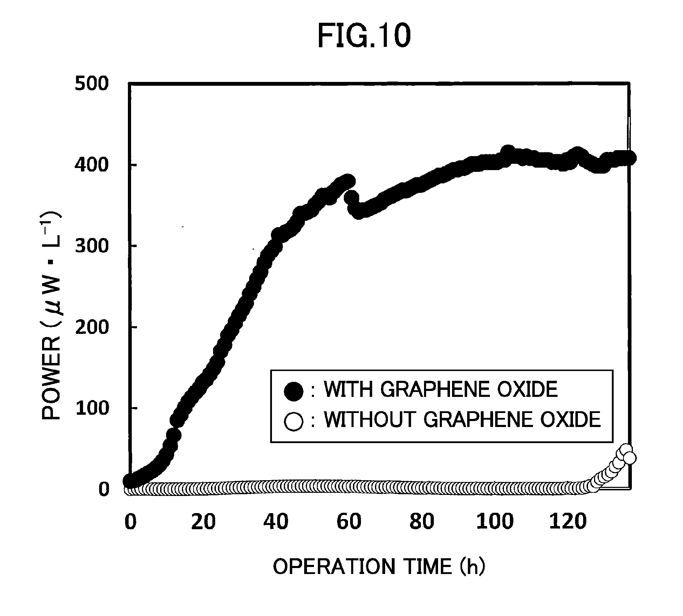

In order to measure the electric power production amount, the conducting wires of the both electrodes were connected through a resistance 16a of 1kΩ, a voltage between the both sides of the resistance 16a was measured, and the electric energy was calculated. The voltage was measured at an interval of one hour for six days (144 hours). The result is shown in Fig. 10. In the drawing, a black circle mark shows the electric power production amount of the soil battery manufactured in the present example embodiment, and a white circle mark shows the electric power production amount of the comparative example.

As apparently shown in Fig. 10, the maximum electric power production amount of the soil battery using the soil A added with the graphene oxide reached 415µW/L. As contrasted thereto, the electric power production amount of the comparative example was approximately 42µW/L at the maximum. From this result, the effect to promote the electric power production in the soil battery added with the graphene oxide was observed.

### (Example embodiment 6)

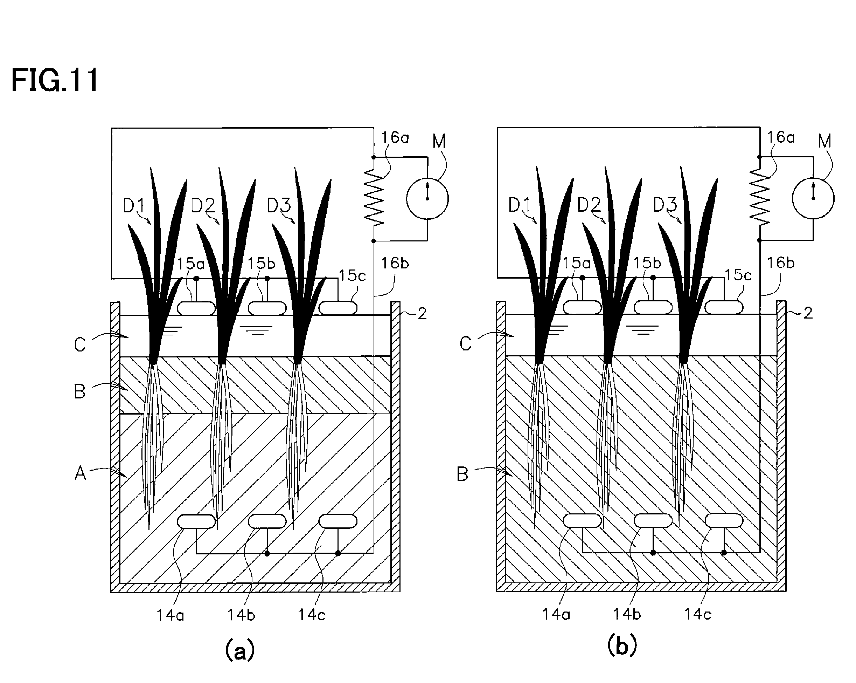

In the present example embodiment, a rice fuel cell using soil added with the graphene oxide was manufactured. Also in the present example embodiment, two kinds of soil were adjusted as soil to be used. One kind was soil A added with the graphene oxide, and the other kind was soil B added with no graphene oxide. The soil A added with the graphene oxide was prepared by adding 3g/L of the graphene oxide to marketed horticultural soil and fully mixing and kneading the soil. As the soil B added with no graphene oxide, the horticultural soil was used as it is. The soil battery of the present example embodiment has a construction as shown in Fig. 11(a). As a manufacturing method, first, 3kg of the soil added with no graphene oxide, sufficient quantity of tap water, and 2kg of the soil A added with the graphene oxide were input to a plastic container (bucket) having the capacity of 15L, and were mixed and kneaded in the container. Three sheets of graphite felts (negative electrodes) 14a, 14b, 14c connected to a conducting wire in series were laid and arranged at suitable intervals on the surface of the mixture. Further, 2.5kg of the soil A added with the graphene oxide was input thereon. Further, 3kg of the soil B added with no graphene oxide was input thereon, and the container was filled with tap water by inputting a sufficient quantity of the tap water. Thus, culture was performed outdoors for ten days. Three rice seedlings D1, D2, D3 were planted in the upper layer soil B after the culture. Further, three sheets of graphite felts (positive electrodes) 15a, 15b, 15c connected to a conducting wire in series were floated on the water surface. The power generation amount was measured while performing the culture outdoors in this state. For comparison, a comparative example shown in Fig. 11(b) was manufactured. As a manufacturing method of the comparative example, the soil B added with no graphene oxide was input in place for the soil A added with the graphene oxide input in the example embodiment 6. The other conditions were similar to those of the example embodiment 6.

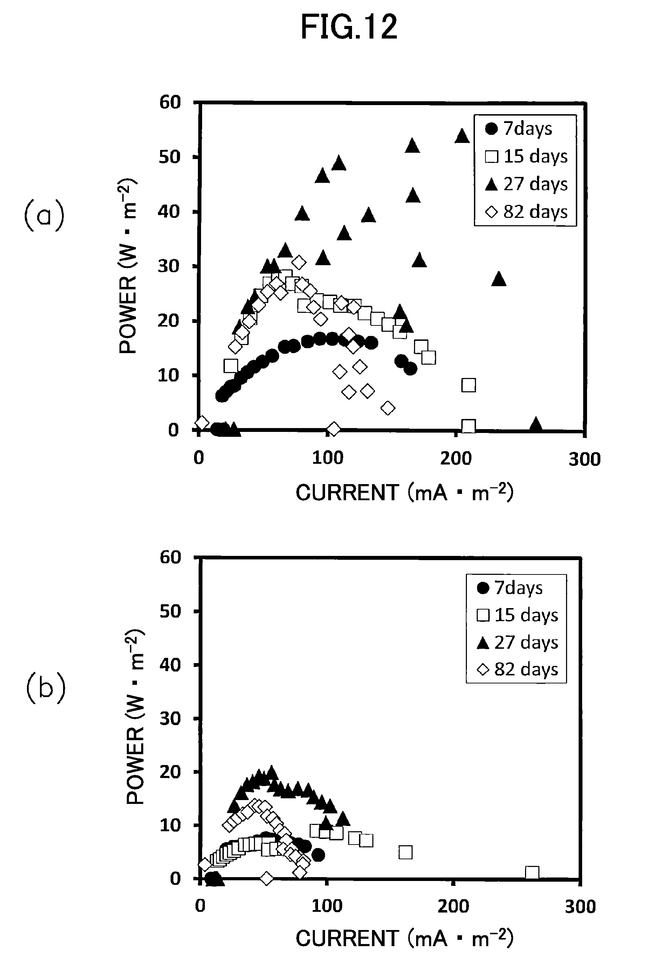

In order to measure the power generation amount, the conducting wires of the both electrodes were connected through an external resistance 16a of 22Ω to 1kΩ, a voltage between the both sides of the resistance 16a was measured, and the electric energy was calculated. The voltage was measured at intervals of 1 hour for approximately three months. As a result, a notably different electric power generation amounts were shown in approximately 60 days in the observation period of three months. Representative seventh day, fifteenth day, twenty-seventh day and eighty-second day are picked up and shown in Fig. 12. Fig. 12(a) shows the result of the present example embodiment and Fig. 12(b) shows the result of the comparative example.

As apparently shown in this diagram, the power generation amount of the rice fuel cell of the present example embodiment was 19 to 54µW/m² while the power generation amount of the rice fuel cell of the comparative example was 6 to 20µW/m². Thus, the effect to promote the electric power production in the rice fuel cell added with the graphene oxide was observed. Moreover, even on the eighty-second day, the electric power production of approximately 30µW/m² was shown, and it was observed that the rice fuel cell maintained prolonged power generation capacity.

### [Description of reference numerals]

- 1, 20, 30, 50: Microbial power generation device
- 11, 51: Negative electrode chamber (negative electrode section)
- 12: Positive electrode chamber (positive electrode section)
- 14, 54: Negative electrode
- 15: Positive electrode
- 16: External circuit
- 22a: Through hole (supply port)
- 22b: Through hole (discharge port)
- 23: Aeration device (oxygen supplying means)
- 32: Anaerobic treatment tank (negative electrode section)
- 32a: Supply port
- 33: Aerobic treatment tank (positive electrode section)
- 33a: Discharge port
- 36: Settling tank (storage tank)
- 36b: Discharge port (release port)
- 38a: Return line (part of returning means)
- 52: Positive electrode (positive electrode, positive electrode section)
- 54: Graphene electrode, electrode for microbial power generation device (microbial power generation device electrode)
- A: Soil added with graphene oxide
- B: Soil added with no graphene oxide
- C: Liquid layer
- D: Aquatic plant (rice)

## Claims

1. A microbial power generation device, comprising:
a negative electrode section that has a liquid containing organic substance and a negative electrode and that biodegrades the organic substance with microbes under an anaerobic atmosphere;
a positive electrode section having a positive electrode; and
an external circuit that electrically connects the positive electrode and the negative electrode, wherein
the microbial power generation device generates power by transferring electrons from the negative electrode section to the positive electrode section via the external circuit, and
the negative electrode section has graphene.

2. The microbial power generation device as in claim 1, wherein
the graphene is produced by reducing graphene oxide with microbes in a liquid.

3. The microbial power generation device as in claim 1 or 2, wherein
the graphene is produced by reducing graphene oxide, which is introduced into the negative electrode section, with the microbes inside the negative electrode section.

4. The microbial power generation device as in claim 2 or 3, wherein
the graphene forms an aggregation structure consisting of dense portions and sparse portions, in which the microbes reducing the graphene oxide adhere to the graphene.

5. The microbial power generation device as in any one of claims 1 to 4, further comprising:
a supply port for supplying a liquid containing organic substance; and
a discharge port for discharging the liquid supplied from the supply port after the liquid passes through the negative electrode section and the positive electrode section, wherein
the positive electrode section is formed to be able to store the supplied liquid,
the positive electrode section has an oxygen supplying means for supplying oxygen to the positive electrode, and
the graphene is introduced into the positive electrode section.

6. The microbial power generation device as in claim 5, further comprising:
a storage tank for storing the liquid discharged from the positive electrode section;
a release port provided as an opening in an upper portion of a wall of the storage tank for releasing a supernatant liquid of the liquid stored in the storage tank; and
a returning means for returning sludge settled in the storage tank to the positive electrode section.

7. A microbial power generation device electrode used for a microbial power generation device that generates power by taking out electrons, which are produced when microbes biodegrade organic substance, to an outside, the electrode comprising:
a conductive structure of graphene enriched in a state where microbes reducing graphene oxide adhere to the graphene.

8. A method for preparing a microbial power generation device electrode used for a microbial power generation device that generates power by taking out electrons, which are produced when microbes biodegrade organic substance, to an outside, the method comprising:
a culturing step for incubating microbes in a liquid containing organic substance and graphene oxide under an anaerobic atmosphere, wherein
the culturing step reduces the graphene oxide to graphene by microbes, and
the produced graphene spontaneously aggregates and packaging
in a state where microbes that reduce the graphene oxide adhere to the graphene, thereby forming a conductive structure.

9. A method for producing electric power using microbes, the method comprising the steps of:
biodegrading organic substance by the microbes under an anaerobic atmosphere;
generating the power by sending electrons produced in connection with the biodegradation from a negative electrode to a positive electrode via an external circuit; and
interposing graphene between the negative electrode and the microbes to transmit the electrons produced by the microbes to the negative electrode.

10. A selective culture method of the microbes used for the electric power producing method as in claim 9, comprising the steps of:
using an agarose solid culture medium that contains organic substance and hydrogen as electron donors and graphene oxide as an electron acceptor;
culturing the microbes adhering to a microbe inoculum source, which is a specimen in environment, using the agarose solid medium; and
slectively isolating the microbes that reduce the graphene oxide by using black graphene, which is produced by reducing the graphene oxide, as an index.
